# EUROPEAN PATENT APPLICATION

(11) **EP 4 354 255 A2**
(43) Date of publication of application: **17.04.2024**
(21) Application number: 23198377.6
(22) Date of filing: 19.09.2023
(51) Int. Cl.: G06F 1/16

(54) **ELECTRONIC DEVICE**

(30) Priority: 21.09.2022 US 202263408651 P
(71) Applicant: Apple Inc., Cupertino CA 95014 (US)
(72) Inventor: LECLERC, Michael E., Cupertino, 95014 (US); TRIVETT, Simon, Waterloo (CA); FARRELL, Lauren, Cupertino, 95014 (US); RUNDLE, Nicholas Alan, Cupertino, 95014 (US)
(74) Representative: Rooney, John-Paul

(57) **Abstract**

A laptop computer may include a base portion including a keyboard, and a display portion flexibly coupled to the base portion. The display portion may include a housing component formed of metal and defining a set of side surfaces, a front cover assembly coupled to the housing component and including a first glass member defining at least a portion of a front exterior surface of the display portion, and a display coupled to the first glass member, and a rear cover assembly coupled to the housing component and including a second glass member defining at least a portion of a rear exterior surface of the display portion.

## Description

### FIELD

The subject matter of this disclosure relates generally to electronic devices, and more particularly, to portable electronic devices such as laptop computers.

### BACKGROUND

Modern consumer electronic devices take many shapes and forms, and have numerous uses and functions. Laptop computers, for example, are common types of computers that provide computing functions in a lightweight, portable form factor. Laptop computers may include input devices, such as keyboards and trackpads, and may have displays to produce graphical outputs.

### SUMMARY

A laptop computer may include a base portion including a keyboard, and a display portion flexibly coupled to the base portion. The display portion may include a housing component formed of metal and defining a set of side surfaces, a front cover assembly coupled to the housing component and including a first glass member defining at least a portion of a front exterior surface of the display portion, and a display coupled to the first glass member, and a rear cover assembly coupled to the housing component and including a second glass member defining at least a portion of a rear exterior surface of the display portion.

The first glass member may define a first portion of the front exterior surface of the display portion, and the housing component may define a second portion of the front exterior surface of the display portion. The second glass member may define a first portion of the rear exterior surface of the display portion, and the housing component may define a second portion of the rear exterior surface of the display portion.

The rear cover assembly may further include an opaque mask structure coupled to an interior surface of the second glass member. The set of side surfaces defined by the housing component may include a first side surface, a second side surface, a third side surface, a first corner surface extending from the first side surface to the second side surface, and a second corner surface extending from the second side surface to the third side surface. The laptop computer may further include a touch-sensing layer positioned between the display and the first glass member.

A laptop computer may include a base portion including a keyboard and a display portion flexibly coupled to the base portion. The display portion may include a housing component defining a first opening along a front side of the housing component and a second opening along a rear side of the housing component, a front cover assembly positioned in the first opening and coupled to the housing component, the front cover assembly including a first glass member defining a display region, and a display coupled to the first glass member, and a rear cover assembly positioned in the second opening and coupled to the housing component, the rear cover assembly including a second glass member defining at least a portion of a rear exterior surface of the display portion.

A laptop computer may include a base portion including a keyboard and a display portion flexibly coupled to the base portion. The display portion may include a front cover assembly including a front cover including a first glass material and defining at least a portion of a front surface of the display portion, and a display positioned below the front cover. The display portion may further include a rear cover including a second glass material and defining at least a portion of a rear surface of the display portion, a housing component coupled to the front cover and rear cover and including a mid-chassis positioned between the front cover and the rear cover, a first flexible circuit element conductively coupled to a display component of the display and extending from the display along a first side edge of the display, at least a portion of the first flexible circuit element positioned between the mid-chassis and the front cover assembly, and a second flexible circuit element conductively coupled to a touch-sensing component of the display and extending from the display along a second side edge of the display different from the first side edge, at least a portion of the second flexible circuit element positioned between the mid-chassis and the front cover assembly. The second side edge of the display may be perpendicular to the first side edge.

The laptop computer may further include a third flexible circuit element conductively coupled to the touch-sensing component of the display and extending from the display along a third side edge of the display different from the first side edge and from the second side edge. The first side edge of the display may be a top side edge of the display, and the second and third side edges of the display may be lateral side edges of the display. A fourth side edge of the display may lack flexible circuit elements extending therefrom, and the fourth side edge of the display may be a bottom side edge of the display. The front cover assembly may further include a circuit board, the first flexible circuit element may be conductively coupled to a first segment of the circuit board, and the second and third flexible circuit elements may be conductively coupled to a second segment of the circuit board, the second segment of the circuit board conductively isolated from the first segment of the circuit board.

A laptop computer may include a base portion including a keyboard, and a display portion flexibly coupled to the base portion and including a housing component, and a cover structure coupled to the housing component and including a transparent cover member having a first thickness and defining a first hole and a transparent camera cover having a second thickness less than the first thickness and positioned in the first hole such that a recess may be defined along a rear surface of the cover structure. The display portion may further include a display coupled to the transparent cover member and defining a second hole extending through an active display region of the display and a camera having a lens assembly extending through the second hole and into the recess.

The transparent cover member may include glass, and the transparent camera cover may include sapphire. The second thickness may be less than or equal to half of the first thickness. The laptop computer may further include a mounting structure adhered to an interior surface of the transparent cover member, the mounting structure defining a ledge positioned in the first hole, and the transparent camera cover may be adhered to the ledge of the mounting structure. The display may be configured to produce a graphical output in the active display region that surrounds the transparent camera cover. The laptop computer may further include a first opaque mask positioned along an interior surface of the transparent cover member and defining a first mask region around the first hole and a second opaque mask positioned along an interior surface of the transparent camera cover and defining a second mask region around a transparent window portion of the transparent camera cover.

A laptop computer may include a base portion including a keyboard, and a display portion flexibly coupled to the base portion and including a housing component including a first wall portion defining a first side exterior surface of the display portion, a second wall portion defining a second side exterior surface of the display portion opposite to the first side exterior surface, and a mid-chassis extending between the first wall portion and the second wall portion and defining an array of attachment holes. The display portion may further include a front cover assembly positioned along a first side of the mid-chassis and including a transparent cover member defining at least part of a front surface of the display portion, a display positioned below the transparent cover, and a mounting structure positioned below the display and including an array of attachment features. The display portion may further include a set of fasteners, each fastener of the set of fasteners extending through a respective attachment hole of the array of attachment holes and engaging with a respective attachment feature of the array of attachment features, and a rear cover assembly positioned along a second side of the mid-chassis and defining at least part of a rear surface of the display portion.

The housing component may be a unitary metal structure defining the mid-chassis, the first wall portion, and the second wall portion. The housing component may include a wall structure formed of metal and defining the first wall portion and the second wall portion, and the mid-chassis may be coupled to the wall structure. The mid-chassis may include a fiber-reinforced polymer sheet.

The fasteners of the set of fasteners may be threaded fasteners, and the attachment features of the array of attachment features may be threaded bosses. The mounting structure may include a metal plate, and the attachment features of the array of attachment features may be welded to the mounting structure.

A laptop computer may include a base portion including a keyboard, and a display portion flexibly coupled to the base portion and including a housing component defining a first wall portion defining a first exterior surface of the display portion, a second wall portion defining a second exterior surface of the display portion opposite to the first exterior surface, and a composite mid-chassis structure coupled to the first wall portion and the second wall portion and extending between the first wall portion and the second wall portion. The display portion may also include a front cover assembly coupled to a front side of the housing component and including a first glass member defining at least a portion of a front exterior surface of the display portion, and a display coupled to the first glass member, and a rear cover assembly coupled to a rear side of the housing component and including a second glass member defining at least a portion of a rear exterior surface of the display portion.

### BRIEF DESCRIPTION OF THE DRAWINGS

The disclosure will be readily understood by the following detailed description in conjunction with the accompanying drawings, wherein like reference numerals designate like structural elements, and in which:
FIGS. 1A-1B depict an example electronic device;
FIG. 2 depicts a partial cross-sectional view of the electronic device of FIGS. 1A-1B;
FIG. 3 depicts an exploded view of a portion of the electronic device of FIGS. 1A-1B;
FIGS. 4A-4B depict an example front cover assembly for an electronic device;
FIG. 4C depicts a partial cross-sectional view of the front cover assembly of FIGS. 4A-4B;
FIGS. 5A-5B depict example front cover assemblies for an electronic device;
FIGS. 6A-6B depict partial cross-sectional views of a display portion for an electronic device;
FIGS. 7A-7B depict portions of example housing components for an electronic device;
FIG. 8A depicts an example housing component for a display portion of an electronic device;
FIGS. 8B-8D depict partial cross-sectional views of example housing components for a display portion of an electronic device;
FIG. 9A depicts an exploded view of an example display portion;
FIG. 9B depicts a partial cross-sectional view of the display portion of FIG. 9A;
FIG. 10A depicts an exploded view of another example display portion;
FIG. 10B depicts a partial cross-sectional view of the display portion of FIG. 10A;
FIG. 11A depicts an exploded view of another example display portion;
FIG. 11B depicts a partial cross-sectional view of the display portion of FIG. 11A;
FIG. 12A depicts an exploded view of another example display portion;
FIG. 12B depicts a portion of the display portion of FIG. 12A;
FIG. 12C depicts a partial cross-sectional view of the display portion of FIG. 12A;
FIG. 13A depicts a portion of an example display portion including a camera;
FIG. 13B depicts a partial cross-sectional view of the display portion of FIG. 13A;
FIGS. 13C-13G depict partial cross-sectional views of a camera window portion of a display portion;
FIG. 14A depicts an example housing component for an electronic device;
FIG. 14B depicts a partial cross-sectional view of a display portion including the housing component of FIG. 14A;
FIG. 15A depicts an exploded view of another example display portion;
FIGS. 15B-15G depict partial cross-sectional views of the display portion of FIG. 15A;
FIG. 16A depicts a portion of the example display portion of FIG. 15A;
FIGS. 16B-16D depict partial cross-sectional views of the display portion of FIG. 15A;
FIG. 16E depicts a portion of a front cover assembly; and
FIG. 17 depicts a schematic diagram of an example electronic device.

### DETAILED DESCRIPTION

Reference will now be made in detail to representative embodiments illustrated in the accompanying drawings. It should be understood that the following descriptions are not intended to limit the embodiments to one preferred embodiment. To the contrary, it is intended to cover alternatives, modifications, and equivalents as can be included within the spirit and scope of the described embodiments as defined by the appended claims.

Laptop computers as described herein include a base portion, which includes input devices such as a keyboard, trackpad, and the like, and a display portion that is flexibly coupled to the base portion (e.g., via a hinge). The display portion includes a display, which may be a touch- and/or force-sensitive display, and may include a camera for capturing images (e.g., still or video images) of a user, such as for videoconferencing purposes.

Because laptop computers are typically portable devices, factors such as size, weight, and durability can affect the overall usefulness of the device. Further, the particular materials used for the laptop computer, and in particular, for the enclosure components, can impact the size, weight, and durability of the computer. For example, enclosure materials such as plastic may be light, but may have relatively low durability.

Described herein are laptop computers in which the display portion has a metal housing component that defines the peripheral side surfaces of the display portion (e.g., a band-like structure around the periphery of the display portion), and glass sheets for the front and back surfaces of the display portion. This configuration produces a display portion that is thin and light, while maintaining a high degree of stiffness. Additionally, because the back of the display portion is made of glass, the back may be more resistant to scratches, cracking, warping, and other damage to which other materials may be susceptible.

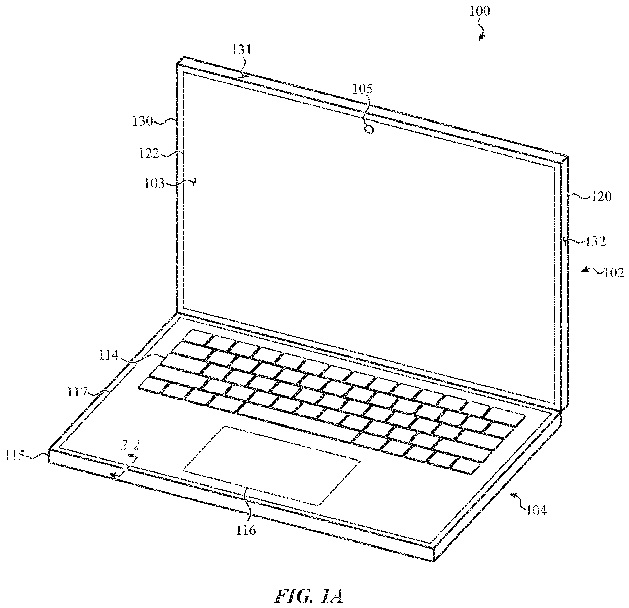

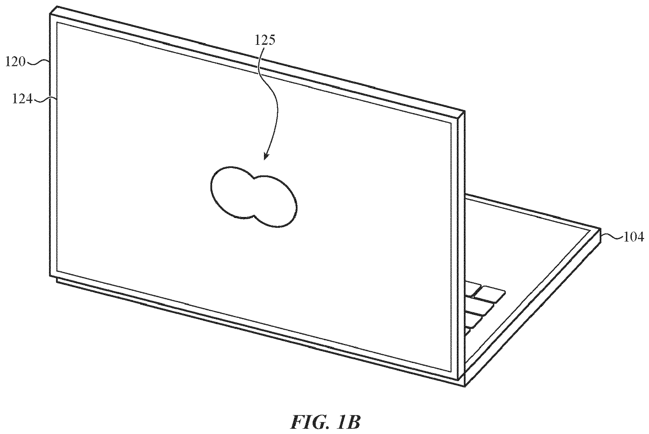

FIGS. 1A-1B depict a computing device 100 (or simply "device 100"). The device 100 may be or may resemble a portable computer, also known as a laptop or notebook computer, that has a display portion 102 and a base portion 104 flexibly or pivotally coupled to the display portion 102 (e.g., so that the display portion 102 is able to rotate, pivot, flex, articulate, or otherwise move relative to the base portion 104). The display portion 102 includes a display 103 that provides a primary means of conveying visual information to the user, such as by displaying graphical user interfaces. The display portion 102 also includes a camera 105. The camera 105 may capture images (e.g., still and/or video images), such as for videoconferencing functions, general image capture/recording, or the like.

The base portion 104 may include a keyboard 114 and a trackpad region 116. The keyboard 114 may be any type of keyboard that can receive typing inputs. For example, the keyboard 114 may be a keyboard with moving keys (e.g., movable keycaps supported by a key mechanism such as a scissor mechanism). As another example, the keyboard 114 may be a virtual keyboard, such as a keyboard that is displayed on a touch-sensitive input surface (e.g., a touch-screen). Other types of keyboards may also be used.

The trackpad region 116 may be configured to detect touch- and/or force-based inputs applied to the base portion 104 in the trackpad region 116. For example, the trackpad region 116 may detect clicks, taps, gestures (e.g., swiping, pinching), multi-touch inputs, and the like. While FIG. 1A illustrates one example shape, size, and location of a trackpad region 116, other configurations are also possible. For example, the trackpad region 116 may be larger or smaller than that shown in FIG. 1A. In some cases, the trackpad region 116 may include substantially the entire region of the upper surface of the base portion 104 other than the keyboard 114.

The base portion 104 may include a base housing component 115 and a top structure 117. The base housing component 115 may define peripheral side surfaces 226 of the base portion 104, and the top structure 117 may define at least a portion of an upper surface of the base portion 104. The base housing component 115 may define a portion 222 of the upper surface of the base portion 104, and a portion 224 of the lower or bottom surface of the base portion 104. As shown, the surfaces 222, 226, and 224 define a continuous surface that extends from the top of the base portion 104 to the bottom of the base portion 104. The base portion 104 may also include a bottom structure 210. The bottom structure 210 may be a plate or sheet that is coupled to the base housing component 115 and defines a bottom surface of the base portion 104. The bottom structure 210 may comprise metal, a polymer, a composite structure, glass, or another suitable material or combination of materials.

In some cases, the base housing component 115 is formed of a metal material, and the top structure 117 is formed of glass, sapphire, ceramic, or glass ceramic. Other materials and combinations of materials are also contemplated for the base housing component 115 and the top structure 117. For example, both the base housing component 115 and the top structure 117 may be formed from metal (e.g., the same or different metals). In some cases, the base portion 104 may have a single component or structure that defines the side and top surfaces of the base portion 104.

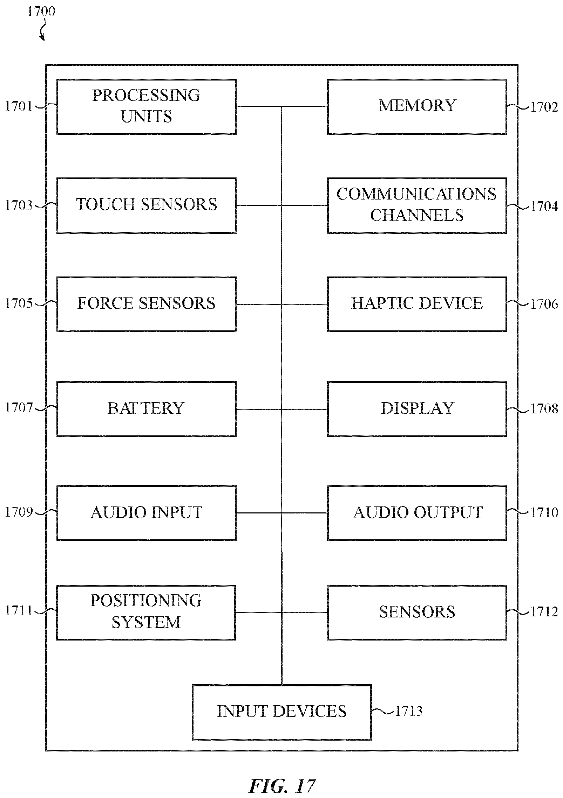

The base portion 104 may also include device components 212. The device components 212 may include all or some of the components described with respect to FIG. 17. For example, the device components 212 may include one or more of a battery, a logic board, a processor, memory, a haptic device, a keyboard, a trackpad, a communication port, a charging port, battery charging circuitry, and the like. Other components (or systems or portions of systems) may also be included in (or otherwise coupled to) the base portion 104.

The display portion 102 may include a housing component 120, a front cover 122, and a rear cover 124. The housing component 120 may be formed from metal and may define a portion of at least three exterior peripheral sides 130, 131, 132 of the display portion 102. As described herein, the housing component 120 may further define a portion of each of the front and rear exterior surfaces of the display portion 102. As described herein, the housing component 120 may define pockets along its front and rear sides, and the front and rear covers 122, 124 may be positioned in the pockets and attached to the housing component 120.

The front cover 122, which may be part of a front cover assembly as described herein, may be formed from glass or another transparent material (e.g., ceramic, glass ceramic, a polymer, etc.), and may define at least a portion of the front exterior surface of the display portion 102. The rear cover 124, which may be part of a rear cover assembly as described herein, may be formed from glass or another transparent material (e.g., ceramic, glass ceramic, a polymer, etc.), and may define at least a portion of the rear exterior surface of the display portion 102. The rear cover 124 may include an indicia 125, such as a logo, icon, shape, or the like. In some cases, the indicia 125 may be defined by one or more layers (e.g., ink layers, deposited coatings, etc.) applied to a surface of a glass or other transparent material of the rear cover 124. The front and rear covers 122, 124 may be positioned in pockets defined by the housing component 120 or otherwise coupled to the housing component 120.

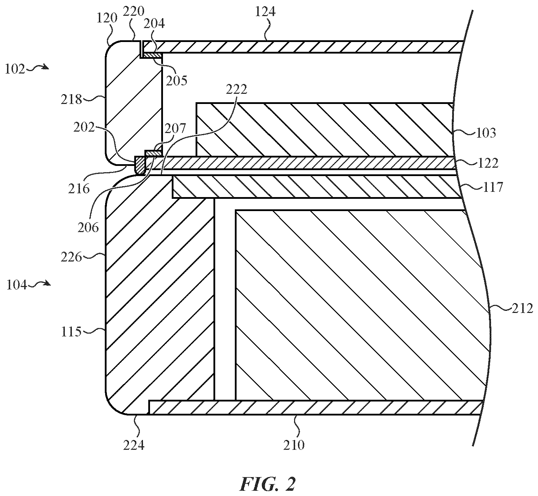

The front cover 122 and the rear cover 124 may define substantially the entire front and rear surfaces, respectively, of the display portion 102. In some cases, the front cover 122 defines greater than about 90%, greater than about 95%, or greater than about 98% of the front surface of the display portion 102. In some cases, the portions of the front surface that are not defined by the front cover 122 are defined by a portion 216 of the housing component 120 (FIG. 2), and optionally a gasket 202 (FIG. 2). In some cases, the rear cover 124 defines greater than about 90%, greater than about 95%, or greater than about 98% of the rear surface of the display portion 102. In some cases, the portions of the rear surface that are not defined by the rear cover 122 are defined by a portion 220 of the housing component 120 (FIG. 2). In some cases, the front cover 122 and the rear cover 124 have substantially the same outward-facing areas (e.g., the area of the front surface defined by the front cover 122 may be substantially equal to the area of the rear surface defined by the rear cover 124. For example, the areas of the outward-facing surfaces of the front and rear covers may differ by less than about 20%, less than about 10%, less than about 5%, or less than about 2.5%. In some cases, the width of the front cover 122 may be substantially equal to the width of the rear cover 124 (e.g., differing by less than about 10% or less than about 5%, or less than about 2.5%, or less than about 1%). In some cases, the height of the front cover 122 may be substantially equal to the height of the rear cover 124 (e.g., differing by less than about 10% or less than about 5%, or less than about 2.5%, or less than about 1%).

The front and rear covers 122, 124 may be coupled to the housing component 120 with techniques that produce a shear-resistant coupling between the covers and the housing component 120 (e.g., a high degree of resistance to relative motion in a plane parallel to the front and/or rear surfaces of the covers). Shear-resistant couplings may impart a high degree of stiffness to the display portion 102. Examples of shear-resistant couplings are described herein, and include, for example, fastening the covers to the housing component 120 via fasteners or other mechanical interlocking features that extend into or through a mid-chassis section of the housing component 120, attaching the covers to a mid-chassis section with adhesives over a large area (e.g., at least 50% of the area of the covers), and the like.

FIG. 2 is a partial cross-sectional view of the device 100, viewed along line 2-2 in FIG. 1A. FIG. 1A illustrates the device 100 in an open position (e.g., with the display portion 102 in an open position relative to the base portion 104), while FIG. 2 illustrates the device 100 in a closed position (e.g., with the display portion 102 in a closed position relative to the base portion 104).

The display portion 102 may include a gasket 202 positioned between the outer periphery of the front cover 122 and a lip or flange portion of the housing component 120. The gasket 202 may protrude past the front exterior surface of the front cover 122, and may prevent or reduce the likelihood of the front cover 122 contacting the base portion 104. The gasket 202 may also prevent or inhibit the peripheral sides of the front cover 122 from contacting the surrounding lip or flange portion of the housing component 120. The gasket 202 may be formed from a polymer material, and may provide a degree of compliance between the various structures and components that it contacts and/or is positioned between.

As shown in FIG. 2, the housing component 120 (e.g., one or more wall portions of the housing component 120) defines a peripheral exterior surface 218 of the display portion 102. In some cases, the peripheral exterior surface 218 extends along or otherwise defines at least three peripheral sides of the display portion 102 (e.g., a top peripheral side and two lateral peripheral sides). In some cases, the peripheral exterior surface 218 is continuous along multiple sides of the display portion 102. For example, the housing component 120 may define a smooth, continuous surface that extends along a first lateral side of the display portion 102 (e.g., a vertical side, when the display portion 102 is in an open position), a top side of the display portion 102, and a second lateral side of the display portion 102.

As noted above, the housing component 120 may define front and rear openings, and the front and rear covers 122, 124 may be positioned in the openings and coupled to the housing component 120. The housing component 120 may define ledges, such as ledges 207, 205, in the openings, and the front and rear covers 122, 124, respectively, may be positioned on the ledges 207, 205. Adhesive structures 206, 204 may adhere portions of the front and rear covers 122, 124 to the ledges 207, 205. The adhesive structures 206, 204 may include adhesive films, cured liquid adhesives, adhesive gaskets, or the like. As used herein, adhesive structures may include a single adhesive material (e.g., an adhesive polymer), or multiple materials and/or components, and may include both adhesive components and non-adhesive components (e.g., an adhesive structure may include a foam substrate and one or more adhesive layers on the surfaces the foam substrate).

The display 103 may be coupled to the front cover 122 and may display graphical outputs that are visible in a display region of the front cover 122. The display 103 may include various display components, such as liquid crystal display (LCD) components, light source(s) (e.g., light emitting diodes (LEDs), organic LEDs (OLEDs)), filter layers, polarizers, light diffusers, covers (e.g., glass or plastic cover sheets), circuit layers, electrode layers, and the like. The display 103 may also include other components such as structural components that support any of the aforementioned components.

In some cases, the display 103 includes components of a touch-sensing system to facilitate the detection of touch inputs applied to the front cover 122. Such components may include, for example, one or more layers of conductive traces (e.g., electrodes) to facilitate capacitive and/or resistive touch-sensing operations. In some cases, the touch-sensing layers may be positioned between the display layers that produce graphical outputs. In some cases, the display 103 may have an integrated (on-cell) touch-sensing system. For example, an array of electrodes (or other touch-sensing components) that are integrated into the display may be time and/or frequency multiplexed in order to provide both display and touch-sensing functionality. The electrodes may be configured to detect a location of a touch, a gesture input, multi-touch input, or other types of touch input along the external surface of the front cover 122. Other types of touch-sensing systems may also be used, and may be integrated into or part of the display 103, or they may be separate from the display 103.

As described herein, the display portion 102 may include a band-like housing component 120 that defines a set of side surfaces of the display portion 102 (such as the peripheral exterior surface 218). Additionally, the housing component 120 may define a portion of each of the front and rear surfaces of the display portion 102. For example, the housing component 120 may define a portion 220 of the rear surface of the display portion 102, and a portion 216 of the front surface of the display portion 102. As shown, the surfaces 216, 218, and 220 define a continuous surface that extends from the front of the display portion 102 to the rear of the display portion 102.

The portion 216 may define a frame-like structure that at least partially surrounds the front cover 122, and the portion 220 may define a frame-like structure that at least partially surrounds the rear cover 124. For example, the portions 216, 220 of the housing component 120 that at least partially surround the covers may extend along three sides of the covers (e.g., the left and right (e.g., vertical) sides and a top (e.g., horizontal) side. In some cases, the portions 216, 220 of the housing component 120 that at least partially surround the covers may extend along four corners of the covers, and may extend along a portion of a fourth side of the covers (e.g., the lower, horizontal side).

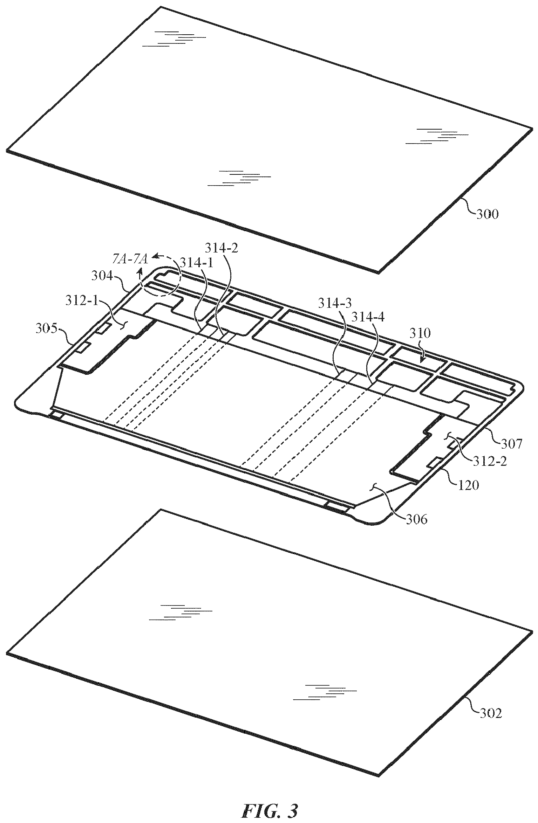

FIG. 3 is an exploded view of the display portion 102, showing the front and rear cover assemblies 300, 302 removed from the housing component 120. The front and rear cover assemblies 300, 302 include the front and rear covers 122, 124, respectively, as well as additional components. For example, the front cover assembly 300 may include a display (e.g., the display 103) attached thereto, as well as other components and/or materials such as a front-facing camera, circuit boards, an ambient light sensor, an indicator light, attachment and/or fastening structures, masking structures, and the like. The rear cover assembly 302 may include attachment and/or fastening structures, masking structures, circuit boards, a rear-facing camera, or the like.

The housing component 120 may include a wall structure 304 that defines the side exterior surfaces of the display portion 102, as described above, and a mid-chassis 306. The mid-chassis 306 may define a plate-like structure that is positioned between the front cover assembly 300 and the rear cover assembly 302. The mid-chassis 306 may extend from a first wall portion 305 that defines a first side exterior surface of the display portion 102 to a second wall portion 307 that defines a second (opposite) side exterior surface of the display portion 102.

The mid-chassis 306 may be formed from a separate material or structure from the wall structure 304, as shown in FIG. 3. For example, the wall structure 304 may be a first structure (e.g., a structure formed from metal such as aluminum), and the mid-chassis may be a second structure (e.g., a structure formed from a composite material) that is secured to the wall structure 304 via adhesive, fasteners, mechanical interlocking features, or other attachment techniques. In some examples, the mid-chassis 306 and the wall structure 304 are formed from a single piece of material (e.g., the mid-chassis 306 and the wall structure 304 may be machined from a single piece of metal).

The mid-chassis 306 may provide structural benefits to the display portion 102. In particular, by providing a mid-chassis 306 that extends between wall portions, the housing component 120 may have a greater stiffness, strength, or other structural characteristic as compared to a housing component 120 that instead includes an empty space or hole between the wall portions. Further, the mid-chassis 306 may include mounting features to which the front and/or rear cover assemblies may be coupled, or that may otherwise be used to couple the front cover assembly and/or the rear cover assembly to the housing component 120. For example, as described herein, the mid-chassis 306 may define holes, and the front cover assembly may be coupled to the housing component 120 by fasteners that extend through the holes from the rear side of the housing component 120. In some cases, the use of fasteners to couple a cover assembly to the mid-chassis 306 may improve repairability of the device, as it may allow the cover assembly to be coupled to the mid-chassis 306 with less adhesive or lower-strength adhesives than would be used if fasteners were not used. Thus, a cover assembly may be removed from the mid-chassis more easily and/or less destructively, allowing faster and more efficient repairs and/or replacement of components.

In some cases, components may be adhered to a surface of the mid-chassis. For example, the rear cover assembly 302 may be adhered to the mid-chassis 306 (e.g., all or substantially all of the surface of the mid-chassis 306 that faces the rear cover assembly 302 may be adhered to the rear cover assembly).

Coupling one or both of the front cover assembly 300 and the rear cover assembly 302 to the mid-chassis 306 may enhance one or more structural characteristics of the display portion 102. For example, coupling a cover assembly to the mid-chassis 306 reduces the ability of the cover assembly to move relative to the mid-chassis 306 in a plane parallel to the main surface of the cover assembly and mid-chassis (e.g., it may increase the shear strength of the display portion 102), or otherwise reduces the ability of the cover assembly and/or the mid-chassis to bow outward or inward relative to the other. This arrangement may improve the overall stiffness (e.g., resistance to bending or twisting) of the display portion 102 as compared to other coupling techniques (e.g., adhering the cover assemblies to the wall structure 304 only around the outer perimeter of the cover assemblies).

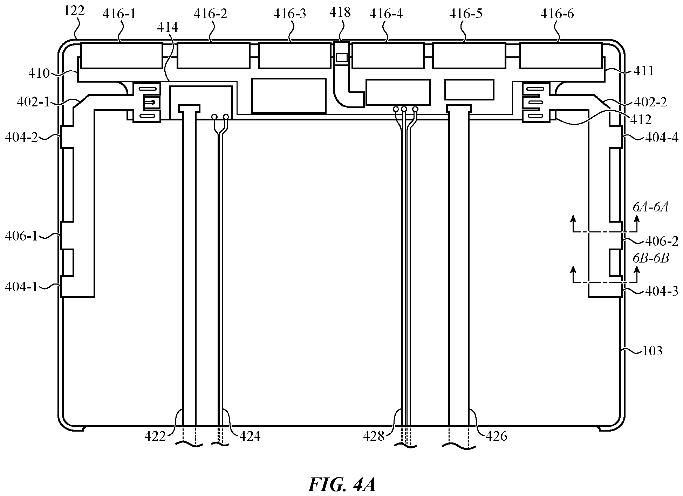

The mid-chassis 306 may define a web structure 308 that defines one or more holes (e.g., hole 310). The holes may accommodate components that are attached to a cover assembly, such as the front cover assembly 300. For example, as shown in FIGS. 4A-4B, the front cover assembly 300 may include display components (e.g., circuit boards, flexible circuit elements, cameras, etc.) that are coupled to or are otherwise positioned along an interior side of the front cover assembly 300. Such components extend at least partially into the holes (or otherwise be aligned with the holes). The holes may therefore allow the display portion 102 to be thinner than might be achieved if the mid-chassis were continuous (e.g., defining an unbroken plate-like structure) in that area, while the web structure 308 maintains a higher degree of structural integrity (e.g., stiffness, strength, etc.) than might be achieved if a single opening were provided instead (e.g., if the web structure were omitted in favor of a single opening extending from one lateral side of the housing component to the other.

The mid-chassis 306 may also define recesses 312 (e.g., 312-1, 312-2) that accommodate components of a cover assembly. For example, as described herein, flexible circuit elements of the front cover assembly 300 may extend into the recesses 312 when the front cover assembly 300 is attached to the housing component 120. The recesses 312 may provide clearance for the flexible circuit elements without significantly increasing the thickness of the mid-chassis and/or the display portion 102 as a whole (e.g., by configuring the mid-chassis 306 to tightly conform to irregular features and/or topography of the front cover assembly 300).

The mid-chassis 306 may also define channels 314 (e.g., 314-1 - 314-4) that extend through the mid-chassis. As described herein, components such as wires, cables, flexible circuit elements, or the like may extend through or otherwise be positioned in the channels 314. For example, wires providing electrical power from the base portion 104 of the device 100 to display components and touch-sensing components of the display portion 102 may extend through channels 314, and flexible circuit elements coupling the display components and touch-sensing components to processing systems in the base portion 104 may also extend through channels 314. In some cases, power and data connections may be positioned in different channels 314 to prevent or reduce the likelihood of electrical interference or crosstalk between the power and data signals.

FIG. 4A depicts an interior of the front cover assembly 300. The front cover assembly 300 includes the front cover 122 and the display 103 coupled to the front cover 122. As described herein, the display 103 may include display components (e.g., components that contribute to producing graphical outputs) and touch-sensing components (e.g., components that facilitate touch-sensing operations). In order to provide signals to and from the display and touch-sensing components, flexible circuit elements may conductively couple the display and touch-sensing components to other circuit elements of the device. For example, flexible circuit elements 416 (e.g., 416-1 - 416-6) may be conductively coupled to a display component of the display 103 and to a circuit board 410, and flexible circuit elements 404 (e.g., 404-1 - 404-4) and 406 (e.g., 406-1 - 406-2) may be conductively coupled to a touch-sensing component of the display 103 and to the circuit board 410. The flexible circuit elements 404-1, 404-2, and 406-1 may be part of a single flexible circuit structure 402-1, and the flexible circuit elements 404-3, 404-4, and 406-1 may be part of a single flexible circuit structure 402-2.

The flexible circuit elements 404, 406, 416 may extend from edges of the display 103 and loop back to extend along the back of the front cover assembly (e.g., between the mid-chassis and the front cover assembly) and couple to the circuit board 410. The loops of the flexible circuit elements 404, 406, 416 may generally extend into a border region of the front cover 122 that is outside the active display region (e.g., between the active display region and the front-facing portion 216 of the housing component 120). Because of the location of the loops at the perimeter of the display, minimizing the loop size may facilitate the use of a smaller border (e.g., inactive) region around the perimeter of the display. This in turn may allow a display portion, and thus the device 100, to be made smaller and/or lighter for an active area of a given size.

The locations of the flexible circuit elements for the display components and touch-sensing components in the display 103 may be selected so as to minimize or reduce the size of the inactive border around the active display region. In the example shown in FIG. 4A, the flexible circuit elements 416 that are conductively coupled to the display component of the display 103 extend from the display along a first edge of the display (e.g., the top edge of the display). Further, the flexible circuit elements 404 and 406 that are conductively coupled to the touch-sensing component of the display 103 extend from the display along edges of the display that are different from the first edge. For example, the flexible circuit elements 404-1, 404-2, and 406-1 extend from the display 103 along a second side edge (e.g., a first lateral side edge) that is perpendicular to the first side edge, and the flexible circuit elements 404-3, 404-4, and 406-2 extend from the display along a third side edge (e.g., a second lateral side edge) that is also perpendicular to the first side edge (and parallel to the second side edge). The arrangement of flexible circuit elements in FIG. 4A also distributes the flexible circuit elements around the perimeter of the display 103 without overlaps (e.g., without having one flexible circuit element loop wrap over another flexible circuit element loop), which may further facilitate a smaller border region around the active region of the display.

The flexible circuit elements 404 and 406 may conductively couple to conductive traces on a touch-sensing element in the display 103. In some cases, the flexible circuit elements 404 are conductively coupled to transmit (Tx) traces (e.g., electrical signals are provided to those traces via the flexible circuit elements 404), and the flexible circuit elements 406 are conductively coupled to receive (Rx) traces (e.g., those traces are monitored for electrical responses indicative of touch inputs). In other examples, the flexible circuit elements 404 are coupled to Rx traces, and the flexible circuit elements 406 are coupled to Tx traces.

As shown in FIG. 4A, no flexible circuit elements couple to the display along the bottom side edge of the display 103. In some cases, the display portion 102 couples to a hinge or other flexible coupling along the bottom side of the display portion 102.

The flexible circuit elements for the display and touch-sensitive components may be coupled to a circuit board 410 that is positioned along an interior or rear side of the front cover assembly 300. The circuit board 410 may be positioned along the top side of the front cover assembly 300, and may include circuit components for the display 103, such as display circuitry for generating graphical outputs, and touch-sensing circuitry for detecting touch inputs. In some cases, the circuit board 410 defines a first segment 411 that is electrically isolated from a second segment 412. For example, the first segment 411 of the circuit board 410 may include conductive traces or layers to interconnect various electrical components coupled to the first segment 411, and the second segment 412 of the circuit board 410 may include conductive traces or layers to interconnect various electrical components coupled to the second segment 412, and the conductive traces or layers of the first and second segments may be physically and/or electrically isolated from one another (e.g., they may not touch one another). As shown, the boundary 414 represents the boundary between the first and second segments 411, 412, and may represent a portion of the circuit board 410 where no conductive traces or layers are present (e.g., a physical gap between the conductive elements of the circuit board). The electrical isolation between the segments of the circuit board 410 may help prevent or inhibit crosstalk or other interference between the display and the touch-sensing circuitry.

In some cases, a front-facing camera 418 may be coupled to the circuit board as well. For example, the front-facing camera 418 may be coupled to the first segment 411 of the circuit board. In other cases, the front-facing camera 418 may be coupled to a separate circuit board, which may be conductively coupled to the circuit board 410 or conductively isolated from the circuit board 410.

As described herein, electrical components in the display portion 102 may be conductively coupled to electrical components in the base portion 104. For example, the display components and touch-sensing components may utilize power and data connections to the components (e.g., a power source, processors, memory, etc.) in the base portion 104. For example, conductive elements 422, 424 may be conductively coupled to the circuit board 410 (e.g., the second segment 412) to provide data and power connections (respectively) to the touch-sensing components of the display 103, and conductive elements 426, 428 may be conductively coupled to the circuit board 410 (e.g., the first segment 411) to provide data and power connections (respectively) to the display components of the display 103. As shown, power and data connections are provided by separate conductive elements (e.g., data connections are provided by flexible circuit elements 422, 426 and power connections are provided by wires 424, 428), though this is merely one example arrangement. In other examples, a single conducive element may provide both data and power connections for the display components and another single conductive element may provide both data and power connections for the touch-sensing components.

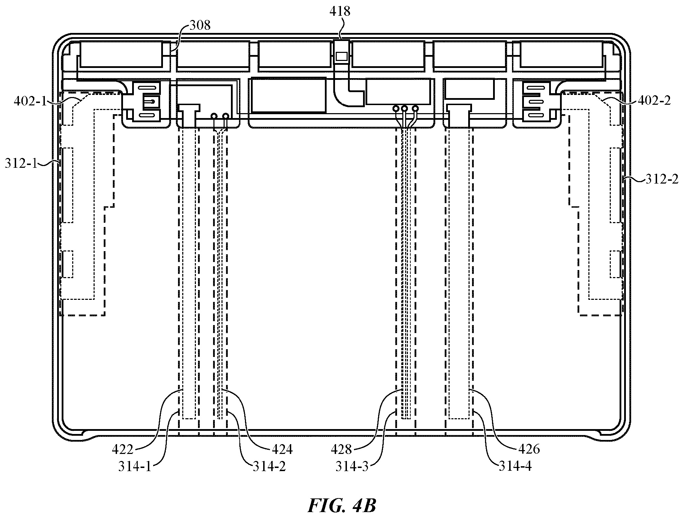

As described above, the conductive elements that provide power and data connections to the front cover assembly 300 may be positioned in and/or extend through channels 314 in the housing component 120. FIG. 4B illustrates the front cover assembly 300 and the housing component 120, viewed from a rear side of the housing component 120. As shown, the conductive elements 422, 424, 426, and 428 are positioned in and/or extend through the channels 314-1, 314-2, 314-4, and 314-3, respectively. The conductive elements may be extended through the channels when the front cover assembly 300 is assembled to the housing component 120. For example, the conductive elements may be coupled to the front cover assembly 300, and then threaded through the channels 314 when the front cover assembly is attached to the housing component 120. In another example, conductive elements may be pre-assembled with the housing component 120 (e.g., built into the mid-chassis when the mid-chassis is assembled and/or attached to the wall structure), and conductively coupled to the front cover assembly during assembly.

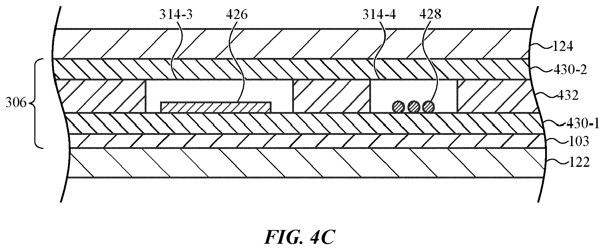

FIG. 4C depicts a partial cross-sectional view of the display portion 102, viewed along line 4C-4C in FIG. 4B. FIG. 4C illustrates the mid-chassis 306 positioned between the rear cover 124 and the front cover 122 (and display 103). In this example, the mid-chassis 306 (e.g., a plate member that at least partially defines the mid-chassis) includes first and second shell layers 430 (430-1, 430-2), and a core 432 between the shell layers 430. The shell layers 430 may be formed from a composite material, such as a fiber-reinforced polymer material. The core 432 may be formed from a low-density polymer material such as a foam, or other suitable core material. The core 432 may define the channels 314, such as the channels 314-3, 314-4 shown in FIG. 4C, and the conductive elements 426 (e.g., a flexible circuit element) and 428 (e.g., one or more wires) may be positioned in the channels. As described above, these are merely examples of conductive elements that may be used, and more or different conductive elements and/or arrangements of conductive elements in the channels 314 are also contemplated.

FIG. 4B also illustrates the positioning of the flexible circuit structures 402 (and the associated flexible circuit elements 404, 406) in the recesses 312. For example, the flexible circuit structure 402-1 (and thus the flexible circuit elements 404-1, 404-2, and 406-1) is positioned at least partially in the recess 312-1, and the flexible circuit structure 402-2 (and thus the flexible circuit elements 404-3, 404-4, and 406-2) is positioned at least partially in the recess 312-2.

FIG. 4B also illustrates an example positioning of components of the front cover assembly 300 relative to the web structure 308 of the housing component 120. For example, the flexible circuit elements 416 (FIG. 4A) are positioned in respective holes 310 defined by the web structure 308. Additionally, holes are provided where the flexible circuit structure 402 is coupled to the circuit board 410, thus accommodating the increased thickness of the assembly in those locations. Holes 310 may also be provided where other components are positioned, such as the camera 418 and/or other components (e.g., processors, memory) that are mounted to the circuit board 410.

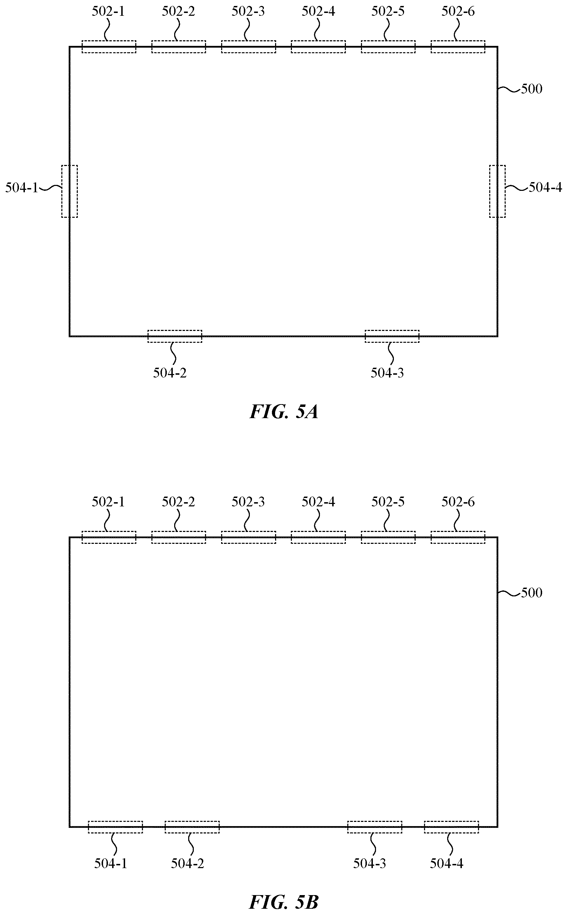

FIGS. 5A-5B illustrate other example locations for flexible circuit elements to couple to display and touch-sensing components of a display. For example, FIG. 5A illustrates an example front cover assembly 500 in which flexible circuit elements 502 that conductively couple to a display component are positioned along a top side edge of the display, and flexible circuit elements 504 that conductively couple to a touch-sensing component are positioned along lateral side edges of the display (504-1, 504-4) and along a bottom edge of the display (504-2, 504-3). In some cases, the flexible circuit elements 504-1 and 504-4 along the lateral side edges are associated with Tx traces, and the flexible circuit elements 504-2 and 504-3 are associated with Rx traces. FIG. 5B illustrates another example of the front cover assembly 500 in which flexible circuit elements 502 for a display component are positioned along a top side edge of the display, and flexible circuit elements 504 are positioned along a bottom edge of the display. In this example, because the lateral side edges lack flexible circuit elements coupled along those edges, the border region along the lateral sides of the display region may be further reduced as compared to an implementation with flexible circuit elements along those edges.

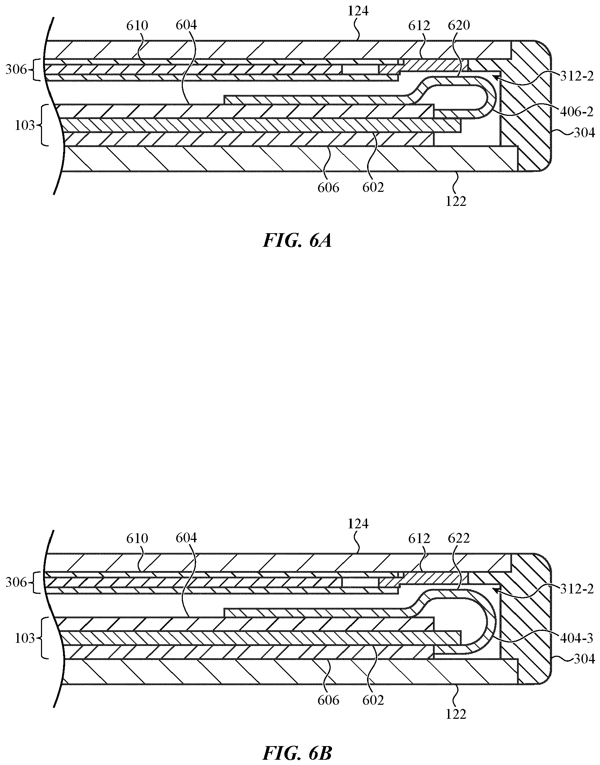

FIGS. 6A-6B depict partial cross-sectional views of the display portion 102, viewed along lines 6A-6A and 6B-6B in FIG. 4A. FIGS. 6A-6B further illustrate the arrangement of the flexible circuit elements in the display portion 102. As shown in FIGS. 6A-6B, the display 103 may include a display component 604 (e.g., a stack of display layers for generating graphical outputs), a touch-sensing substrate 602, and an adhesive layer 606 coupling the display 103 to the front cover 122. The touch-sensing substrate 602 may be a transparent substrate (e.g., glass, a transparent polymer, etc.) with conductive traces along a top and bottom surface. The conductive traces along one surface may be Tx traces, while the conductive traces along the other surface may be Rx traces. The traces may be formed of a conductive (and optionally transparent) material, such as indium tin oxide (ITO), silver nanowire, conductive polymers, or another suitable material. The flexible circuit element 406-2 may be coupled to a touch-sensitive component in the display, such as a touch substrate 602.

As shown in FIGS. 6A-6B, the flexible circuit elements 406-2 and 404-3 may be coupled to opposite sides of the touch-sensing substrate 602 to allow them to conductively couple to the different traces. For example, as noted above, the flexible circuit elements 406 may be coupled to Rx traces on a first side (e.g., the top side as oriented in FIG. 6A) of the touch-sensing substrate 602, and the flexible circuit elements 404 may be coupled to Tx traces on a second side (e.g., the bottom side as oriented in FIG. 6B) of the touch-sensing substrate 602. (In other examples, the Tx and Rx traces are on the other surfaces of the touch-sensing substrate 602.)

The flexible circuit elements may define loops to facilitate the flexible circuit elements being folded back over the back or interior side of the display 103. For example, the flexible circuit element 406-2 (FIG. 6A) may define a loop 620, and the flexible circuit element 404-3 (FIG. 6B) may define a loop 622. The loops 620, 622 may extend past the back or interior side of the display 103. For example, the flexible circuit elements may have a minimum allowable bend radius to help ensure that the flexible circuit elements do not break or become damaged. Accordingly, recesses in the housing component 120, such as the recess 312-2, may accommodate the loops 620, 622. As shown in FIGS. 6A-6B, the recess 312-2 may be defined in the mid-chassis 306. For example, the mid-chassis 306 may include a plate member 610 (which may include shell layers and a core, as described with respect to FIG. 4C), and a flange member 612. In some cases, the flange member 612 defines the recess 312-2. The recess 312-2 may be recessed relative to the display-facing surface of the plate member 610 (e.g., the bottom surface of the plate member 610 as oriented in FIGS. 6A-6B), and/or relative to other internal structures or components of the display portion 102. As shown, the loops 620, 622 (and optionally other loops positioned along the same side of the display) may extend into the recess 312-2.

While FIGS. 6A-6B illustrate the flange member 612 defining the recess 312-2, this is merely one example implementation. In some cases, the mid-chassis may be defined by a different configuration or structure (e.g., a unitary metal structure). In such cases, the recess 312-2 may be defined by a different structure or component. Further, while FIGS. 6A-6B illustrate one lateral side of the display portion 102 and flexible circuit elements along that side, it will be understood that a similar configuration may be used on the other lateral side of the display portion as well.

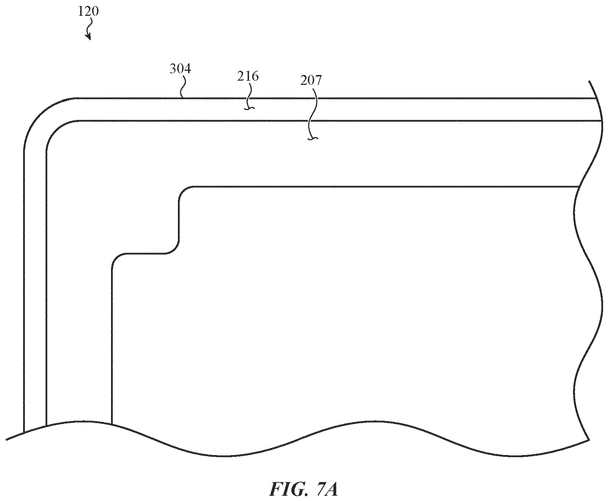

FIG. 7A illustrates a portion of the housing component 120 corresponding to area 7A-7A in FIG. 3. The housing component 120 includes the wall structure 304. The wall structure 304, or the housing component 120 more generally, defines a portion 216 of the front-facing surface of the display portion 102, and a ledge 207 on which the front cover 122 may be positioned and/or adhered.

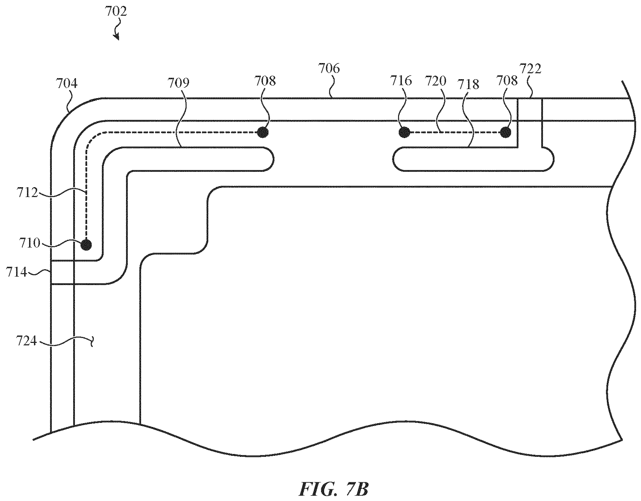

In some cases, a wall structure, or the housing component more generally, may define radiating portions of an antenna system for the device 100. FIG. 7B illustrates an example housing component 702. Except where noted herein, the housing component 702 may be the same as the housing component 120, and the features, structures, etc., of the housing component 120 are understood to be equally applicable to the housing component 702.

FIG. 7B illustrates how a portion of the housing component 702 may be electrically connected to antenna circuitry to receive and/or send wireless communication signals. For example, antenna circuitry may be connected to a first segment 704 of the housing component 702 at a first connection point 708 and a second connection point 710. The first segment 704 of the housing component may be defined by a slot 709 (e.g., an elongated channel-like opening) formed in the housing component 702. In some cases, the first connection point 708 is coupled to an electrical ground, and the second connection point 710 is coupled to an antenna feed (e.g., a source of an electromagnetic signal that transmits wireless signals to the first segment 704, and/or a circuit that receives and/or analyzes an electromagnetic signal received by the first segment 704). A conductive path 712 may be defined between the connection points 708, 710, corresponding to the conductive path corresponding to an electromagnetic component of a transmitted or received wireless communication signal.

A molded element 714 may be positioned in the slot 709. The molded element 714 may be formed from a dielectric material, such as a polymer, fiber-reinforced polymer, multiple polymers, or the like. The molded element 714 may electrically isolate the first segment 704 from the rest of the housing component 702, at least along a length of the first segment 704. Accordingly, the molded element 714 at least partially defines the conductive path 712 and isolates the conducive path 712 to the first segment 704, thus allowing the first segment 704 to function as an antenna.

FIG. 7B also shows a second segment 706 that may operate as an antenna. The second segment 706 may be defined by a slot 719 formed in the housing component 702. Similar to the discussion above with respect to the second segment 704, antenna circuitry may be connected to the second segment 706 at a first connection point 716 and a second connection point 718. In some cases, the first connection point 716 is coupled to an electrical ground, and the second connection point 718 is coupled to an antenna feed (e.g., a source of an electromagnetic signal that transmits wireless signals to the second segment 706, and/or a circuit that receives and/or analyzes an electromagnetic signal received by the second segment 706). A conductive path 720 may be defined between the connection points 716, 718 corresponding to the conductive path corresponding to an electromagnetic component of a transmitted or received wireless communication signal.

Molded elements 714, 722 may be positioned in the slots 709, 719, respectively. The molded elements 714, 722 may be formed from a dielectric material, such as a polymer, fiber-reinforced polymer, multiple polymers, or the like. The molded elements 714, 722 may electrically isolate the first and second segments from the rest of the housing component 702, at least along a length of the first and second segments. Accordingly, the molded elements 714, 722 at least partially define the conductive paths 712, 720 and isolate the conducive paths to their respective segments, thus allowing the first and second segments to function as antennas. The molded elements 714, 722 may also define part of a ledge 724 on which the front cover 122 may be positioned and/or adhered.

FIG. 7B shows an example configuration for two segments 704, 706 defined by the housing component 120. In some cases, additional similar segments may be included to provide additional antenna elements for the device. In some cases, the lengths of the segments 704, 706 (and/or the lengths of the slots that at least partially define the segments 704, 706) may be different from one another, or may otherwise be configured to communicate using different frequencies, frequency bands, wireless communication protocols, or the like. For example, the first segment 704 may be configured to operate on a 2.4 GHz and 5 GHz frequency band (e.g., to operate as a WiFi antenna), while the second segment 706 may be configured to operate on a 2.45 GHz frequency band (e.g., to operate as a Bluetooth antenna). Other frequency bands are also contemplated.

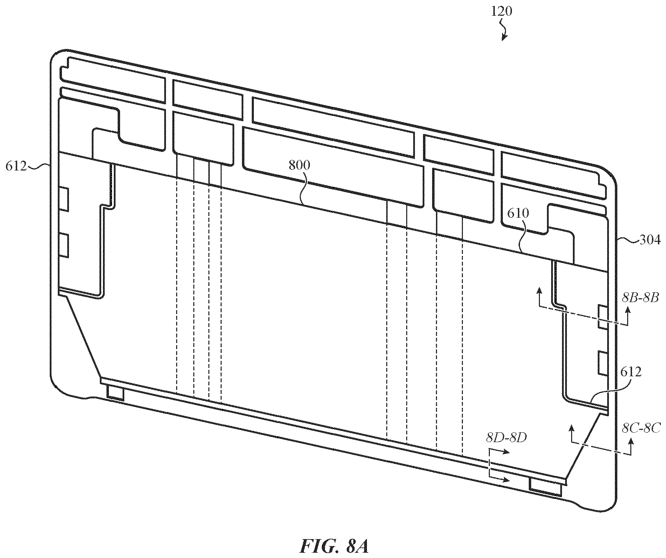

FIGS. 8A-8D illustrate additional details of the housing component 120. In this example, the housing component 120 includes the wall structure 304 and the plate member 610. For example, the wall structure 304 defines an opening 800, and the plate member 610 may be positioned in the opening 800 and coupled to the wall structure 304. The plate member 610 may correspond to or at least partially define the mid-chassis 306 (FIG 3). Flange members 612 may be coupled to the plate member 610, and may also define part of the mid-chassis 306. (As described herein, in other examples, a single piece (e.g., monolithic) housing component defines both the wall structure and the mid-chassis, and in those examples a plate member and flange members may not be used.)

The plate member 610 and the flange members 612 may be coupled to the wall structure 304, and may provide structural rigidity to the wall structure 304. The plate member 610 and flange members 612 may be coupled to the wall structure 304 via adhesives, mechanical fasteners, interlocking features, or other coupling techniques.

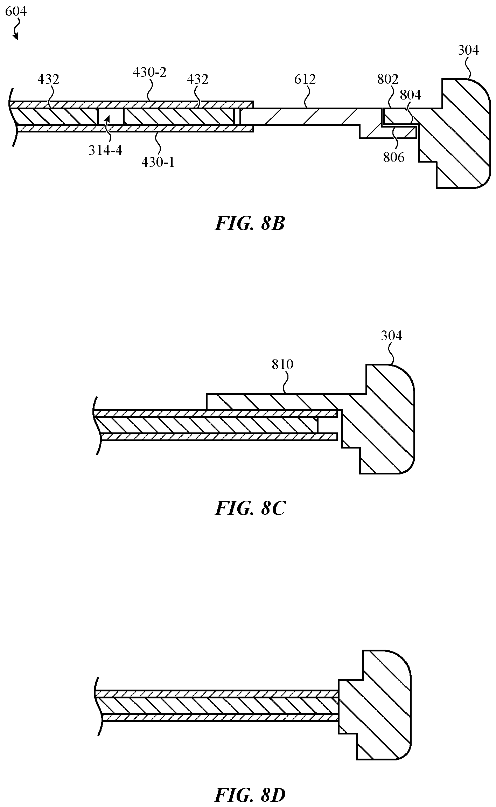

FIG. 8B depicts a partial cross-sectional view of the housing component 120, viewed along line 8B-8B in FIG. 8A. FIG. 8B illustrates one example technique for coupling the plate member 610 to the flange member 612 and coupling the flange member 612 to the housing component 120. For example, as described above, the plate member 610 includes first and second shell layers 430 (430-1, 430-2), and a core 432 between the shell layers 430. Further, channels, such as the channel 314-4, may be defined in the core 432. A portion of the flange member 612 may be positioned between and coupled to the shell layers 430. For example, the shell layers 430-1 and 430-2 may be adhered to the surfaces of the flange member 612, as shown, using an epoxy, adhesive film, cyanoacrylate, or another suitable adhesive. Instead of or in addition to adhesives, fasteners may be used to couple the shell layers 430 to the flange member 612 (e.g., screws, bolts, etc.).

To couple the flange member 612 (and thus the plate member 610, where the plate member 610 and the flange member 612 are attached to one another), the flange member 612 may define a ledge portion 806 that overlaps and is coupled to a ledge portion 804 of the wall structure 304. The ledge portions 804, 806 may be adhered to one another using an epoxy, adhesive films, cyanoacrylate, or another suitable adhesive. Instead of or in addition to adhesives, fasteners may be used to couple the flange member 612 to the wall structure 304 (e.g., screws, bolts, etc.).

FIG. 8B illustrates overlapping features (e.g., ledges) between the flange member 612 and the wall structure 304. In some cases, the flange member 612 and the wall structure 304 define multiple distinct (e.g., localized) overlapping features in different locations to facilitate coupling between the mid-chassis and the wall structure 304.

In areas where the flange members are not present, the plate member 610 may be coupled to the wall structure 304. For example, as shown in FIG. 8C, which depicts a partial cross-sectional view of the housing component viewed along line 8C-8C in FIG. 8A, at some locations the wall structure 304 may define a mounting feature 810, and the plate member 610 may overlap and be coupled to a surface of the mounting feature 810 (e.g., via adhesive, fasteners, etc.). Additionally or alternatively, as shown in FIG. 8D, which depicts a partial cross-sectional view of the housing component viewed along line 8D-8D in FIG. 8A, at some locations a peripheral side of the plate member 610 may abut a surface of the wall structure 304. The plate member 610 may be adhered to the surface of the wall structure 304 (e.g., via epoxy, cyanoacrylate, or another suitable adhesive). Fasteners and/or other attachment techniques may be used instead of or in addition to adhesive.

The plate member 610 may be formed from various different materials or combinations of materials. For example, the plate member 610 may include shell layers 430 and a core 432. The shell layers 430 may be formed from a composite material, such as a fiber-reinforced polymer material (e.g., carbon-fiber reinforced polymer, aramid fiber reinforced polymer, glass-fiber reinforced polymer, ceramic-fiber reinforced polymer, etc.). The core 432 may be formed from a low-density polymer material such as a foam, or other suitable core material. In another example, the plate member (or the mid-chassis more generally) may be formed from a single sheet of material, such as a sheet of a composite material (e.g., carbon-fiber reinforced polymer, aramid fiber reinforced polymer, glass-fiber reinforced polymer, ceramic-fiber reinforced polymer, etc.). In another example, the plate member (or the mid-chassis more generally) may be formed from a sheet of metal (e.g., aluminum, steel, titanium, a metal alloy, etc.). Where flange members are used, the flange members may be formed from a composite material, such as a fiber-reinforced polymer material (e.g., carbon-fiber reinforced polymer, aramid fiber reinforced polymer, glass-fiber reinforced polymer, ceramic-fiber reinforced polymer, etc.), a polymer material (e.g., polycarbonate, acrylic, polyethylene), a metal (e.g., aluminum, steel, titanium, a metal alloy, etc.), or another suitable material.

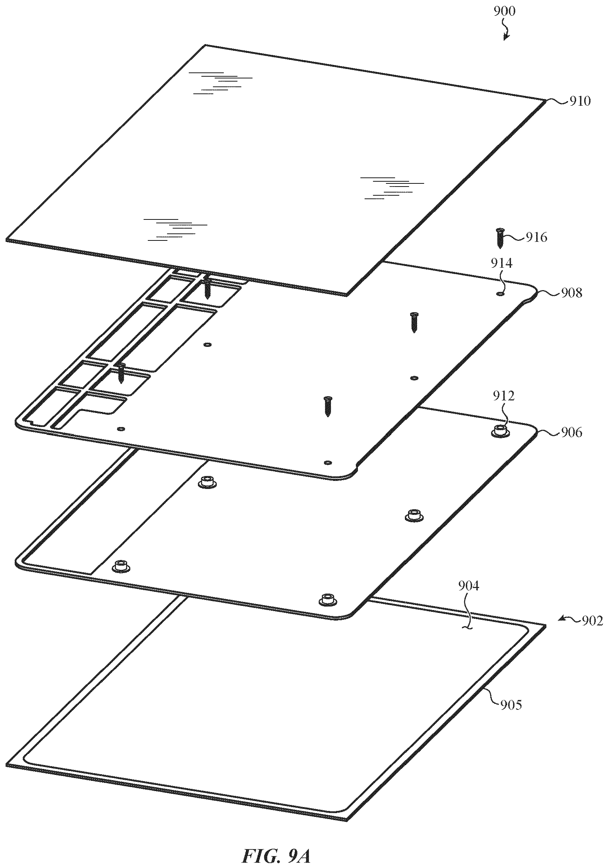

FIG. 9A depicts an exploded view of an example display portion 900. The display portion 900 includes a front cover assembly 902, a housing component 908, and a rear cover assembly 910. The front cover assembly 902 includes a front cover 905 (which may be an embodiment of the front cover 122) and a display 904 (which may be an embodiment of the display 103). The display 904 may be coupled to the front cover 905 via an adhesive (e.g., an optically clear adhesive between the display 904 and the front cover 905), and optionally additional coupling structures such as fasteners, clips, interlocking features, or the like. The rear cover assembly 910 may include a rear cover and one or more masking layers, as described with respect to other rear cover assemblies described herein. The housing component 908, which may be an embodiment of the housing component 120, may define a mid-chassis 907 (e.g., a plate member or plate-like section of the housing component 908), as well as a web structure and a wall structure, as described above. The housing component 908 may be formed from a metal (e.g., aluminum, steel, titanium, a metal alloy, etc.), a polymer material (e.g., polycarbonate, acrylic, polyethylene), a composite material (e.g., a fiber-reinforced polymer), or another suitable material.

The front cover assembly 902 also includes a mounting structure 906. The mounting structure 906 may be adhered to the interior surface of the display 904, and may also be coupled to the front cover 905 (e.g., via adhesive, fasteners, interlocking structures, or the like). The mounting structure 906 may be formed from metal (e.g., aluminum, steel, a metal alloy, etc.), a polymer, a composite material (e.g., a fiber reinforced polymer, etc.), or another suitable material.

The secure coupling between the mounting structure 906 and the display 904 and front cover 905 allows the mounting structure 906 to structurally couple the front cover assembly 902 to the housing component 908, as described herein. For example, the mounting structure 906 may include an array of attachment features 912 that engage with fasteners that extend through attachment holes 914 in the housing component 908. The attachment features 912 may be threaded bosses or holes that receive threaded fasteners. The attachment features 912 may be integrally formed with the mounting structure 906 (e.g., machined into the material of the mounting structure 906), or they may be formed separately and attached to the mounting structure 906. For example, separately formed attachment features 912 (e.g., threaded bosses or other structures) may be welded, brazed, soldered, adhered, or otherwise attached to the mounting structure 906.

A set of fasteners 916 may couple the mounting structure 906 (and thus the front cover assembly 902) to the housing component 908. In particular, the housing component 908 may define an array of attachment holes 914. The fasteners 916, which may be threaded fasteners such as screws or bolts, extend through attachment holes 914 in the housing component 908 and engage with respective attachment features 912. Thus, the mid-chassis 907 is captured between the fasteners 916 and the mounting structure 906, such that the front cover assembly 902 is retained to the housing component 908. In some cases, the front cover assembly 902 is also adhered to the housing component 908. For example, the front cover assembly 902 may be adhered to the housing component 908 around a perimeter of the display 904. The adhesive between the front cover assembly 902 and the housing component 908 may couple the front cover assembly 902 to the housing component 908, and may define a seal between the components (e.g., to prevent or inhibit ingress of dust, liquids, or other contaminants).

As described above, the mechanical coupling between the front cover assembly 902 and the housing component 908 may result in a shear-resistant coupling between the front cover assembly 902 and the housing component 908 (e.g., a high degree of resistance to relative motion in a plane parallel to the front and/or rear surfaces of the covers). This shear-resistant coupling may impart a high degree of stiffness to the display portion 900. The shear resistance imparted by the mechanical coupling between the front cover assembly 902 and the housing component 908 may also facilitate the use of a lower-strength adhesive between the front cover assembly 902 and the housing component 908. This may increase repairability, as the components can be more easily removed from one another to facilitate repair and/or replacement of the device.

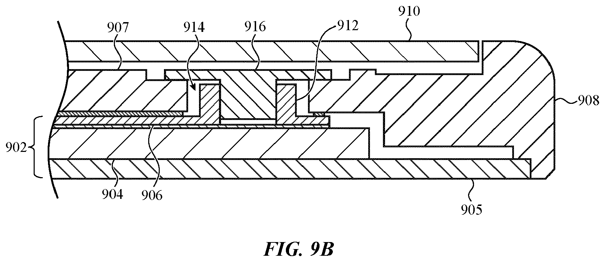

FIG. 9B depicts a partial cross-sectional view of the front cover assembly 902, viewed along line 9B-9B in FIG. 9A. FIG. 9B depicts how the front cover assembly 902 is coupled to the housing component using the fasteners 916. In particular, the fastener 916 (e.g., a screw) extends through the hole 914 in the mid-chassis 907 and engages the attachment feature 912. A portion of the mid-chassis 907 is captured between fastener 916 and the mounting structure 906, thereby attaching the front cover assembly 902 to the housing component 908.

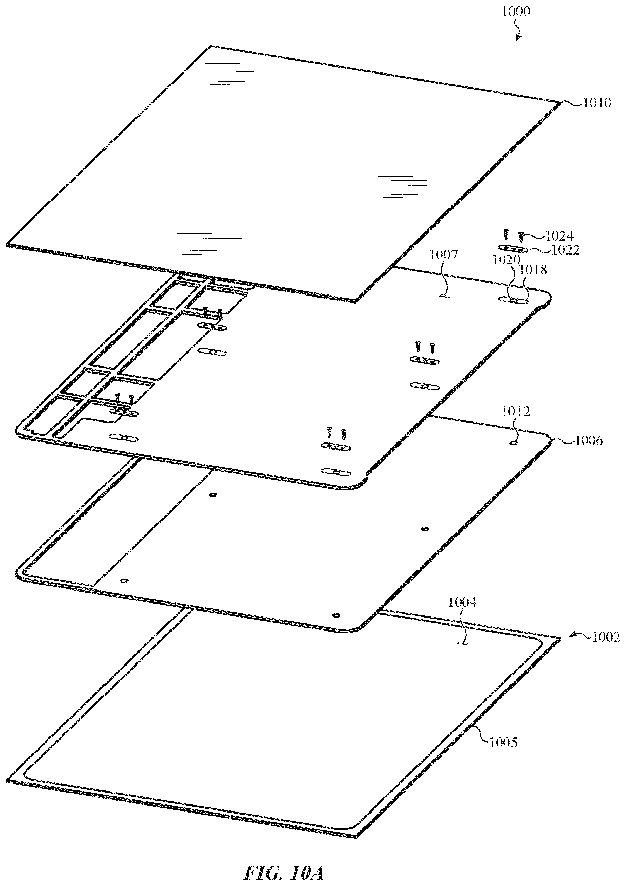

As described herein, a shear-resistant coupling between the housing component and the front cover assembly (and optionally the rear cover assembly) may result in a display portion with high strength and stiffness. As described herein, a shear-resistant coupling may be produced using fasteners or other engaging features that prevent or inhibit lateral movement of a front cover assembly and a housing component (e.g., pins, posts, fasteners, or other features that prevent relative movement in a plane parallel to the display surface). FIGS. 9A-9B, for example, illustrate a set of fasteners that couple a front cover assembly to a housing component. FIGS. 10A-10B illustrate another example technique for producing a shear-resistant coupling between a front cover assembly and a housing component.

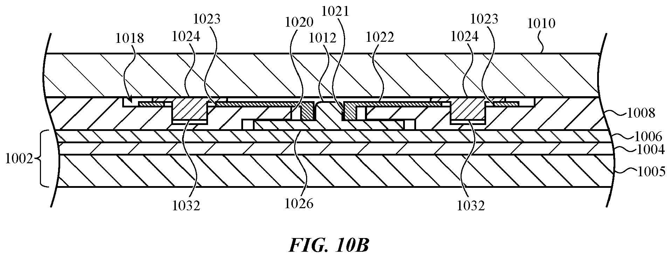

FIG. 10A is an exploded view of an example display portion 1000, and FIG. 10B is a partial cross-sectional view of the display portion 1000, viewed along line 10B-10B in FIG. 10A. In this example, the front cover assembly includes an array of pins to engage corresponding receptacles on the housing component to inhibit shear motion between the front cover assembly and the housing component. Additionally, the display portion 1000 includes adjustable receptacles that can be adjusted to match the precise locations of an array of pins while also providing a high-tolerance coupling between the pins and receptacles.

As shown in FIG. 10A, the display portion 1000 includes a front cover assembly 1002, a housing component 1008, and a rear cover assembly 1010. The front cover assembly 1002 includes a front cover 1005 (which may be an embodiment of the front cover 122) and a display 1004 (which may be an embodiment of the display 103). The display 1004 may be coupled to the front cover 1005 via an adhesive (e.g., an optically clear adhesive between the display 1004 and the front cover 1005), and optionally additional coupling structures such as fasteners, clips, interlocking features, or the like. The rear cover assembly 1010 may include a rear cover and one or more masking layers, as described with respect to other rear cover assemblies described herein. The housing component 1008, which may be an embodiment of the housing component 120, may define a plate member 1007, as well as a web structure and a wall structure, as described above. The housing component 1008 may include or define a mid-chassis. The housing component 1008 may be formed from a metal (e.g., aluminum, steel, titanium, a metal alloy, etc.), a polymer material (e.g., polycarbonate, acrylic, polyethylene), a composite material (e.g., a fiber-reinforced polymer), or another suitable material.

The front cover assembly 1002 also includes a mounting structure 1006. The mounting structure 1006 may be adhered to the interior surface of the display 1004, and may also be coupled to the front cover 1005 (e.g., via adhesive, fasteners, interlocking structures, or the like). The mounting structure 1006 may be formed from metal (e.g., aluminum, steel, a metal alloy, etc.), a polymer, a composite material (e.g., a fiber reinforced polymer, etc.), or another suitable material.

The mounting structure 1006 includes an array of pins 1012 that extend from the rear-facing surface of the mounting structure 1006 and that engage with corresponding holes on the housing component 1008. The pins 1012 may be integrally formed with the mounting structure 1006 (e.g., machined from the material of the mounting structure 1006), or they may be formed separately and attached to the mounting structure 1006. For example, separately formed pins 1012 may be welded, brazed, soldered, adhered, or otherwise attached to the mounting structure 1006. The pins 1012 may include a base 1026, which may be attached to the mounting structure 1006.

The pins may engage adjustable coupling plates 1022 that are coupled to the housing component 1008. For example, coupling plates 1022 may be positioned on a side of the housing component 1008 opposite to the front cover assembly 1002 and may be coupled to the housing component 1008 (e.g., via fasteners such as screws). The coupling plates 1022 may define a hole 1021 that is configured to receive a pin 1012 therein. The hole 1021 maybe formed through a protrusion or other feature of the coupling plate 1022 that extends into a hole 1020 defined through the housing component 1008. Thus, when the front cover assembly 1002 is coupled to the housing component 1008, the pins 1012 engage with the holes 1021 in the coupling plates 1022, thereby forming an engagement that inhibits shear motion between the front cover assembly 1002 and the housing component 1008 (e.g., relative motion in a plane parallel to the front and/or rear surfaces of the display portion).

The coupling plates 1022 may be adjustable to accommodate slight deviations in pin location from device to device. In particular, the housing component 1008 may define recesses 1018 that receive the coupling plates 1022 therein. Further, the coupling plates 1022 may define through holes 1023, and fasteners 1024 (e.g., screws) may extend through the through holes 1023 and into fastener holes 1032 defined in the housing component 1008. The openings that define the recesses 1018 may be larger than the coupling plates 1022, such that the coupling plates 1022 can move within the recesses 1018 (e.g., they can move within the recesses 1018 along a horizontal plane as oriented in FIG. 10B). Additionally, the through holes 1023 may be larger than the shafts of the fasteners 1024, such that the coupling plates 1022 can be moved within the recesses 1018 when the fasteners 1024 are inserted through the through holes 1023 and into the fastener holes 1032 (but before the fasteners 1024 are tightened).

The clearances that allow the coupling plates 1022 to move within the recesses 1018 may be used to tailor the exact location of each coupling plate 1022 to the exact location of the corresponding pin 1012 on the mounting structure 1006. For example, during assembly of the display portion 1000, the coupling plates 1022 may be positioned in the recesses 1018. Optionally, the fasteners 1024 may be engaged with the fastener holes 1032, but remain loose enough to allow the coupling plates 1022 to move within the recesses 1018. The front cover assembly 1002 may then be placed into a target position relative to the housing component 1008. For example, the front cover assembly 1002 may be positioned in a front opening of the housing component 1008 such that the front cover assembly 1002 is positioned in its target final assembly position. As the front cover assembly 1002 is positioned in the target position relative to the housing component 1008, the pins 1012 may engage the coupling plates 1022 such that the pins 1012 force the coupling plates 1022 into proper alignment. For example, the pins 1012 may define a tapered or rounded end that enters the holes 1021 in the coupling plates 1022 even if the holes 1021 are not concentric with the pins 1012. As the pins enter further into the holes 1021, the contact between the surfaces of the pins 1012 and the surfaces that define the holes 1021 may shift the coupling plates 1022 horizontally (as oriented in FIG. 10B) until the coupling plates 1022 are properly aligned (e.g., the holes 1021 are concentric with the pins). In some cases, the coupling plates 1022 are manipulated by a separate device, system, or person in order to align them relative to the pins 1012.

Once the coupling plates 1022 are aligned (and while the pins 1012 are still engaged with the coupling plates 1022), the fasteners 1024 are tightened to restrict further movement of the coupling plates 1022 within the recesses. Once the fasteners 1024 are tightened, the engagement between the pins 1012 and the coupling plates 1022 defines a secure shear-resistant coupling between the front cover assembly 1002 and the housing component 1008.

In some cases, the adjustment operation for the coupling plates 1022 occurs as the front cover assembly 1002 is being attached to the housing component 1008 for final assembly. For example, an adhesive may be applied to one or both of the front cover assembly 1002 and the housing component 1008, and the positioning of the front cover assembly 1002 on the housing component 1008 results in the front cover assembly 1002 being attached to the housing component 1008 and causes the alignment of the coupling plates 1022.

In some cases, after the fasteners 1024 are tightened, the front cover assembly 1002 may be temporarily removed from the housing component 1008, such as to facilitate further assembly operations. Ultimately, the front cover assembly 1002 may be coupled to the housing component 1008 (with the pins 1012 engaged with the coupling plates 1022), and secured with adhesives, fasteners, or the like.

Once the fasteners 1024 are tightened (and optionally after the front cover assembly 1002 is attached to the housing component 1008), the rear cover assembly 1010 may be coupled to the housing component 1008. The rear cover assembly 1010 may be coupled to the housing component via adhesive, fasteners, interlocking features, or the like.

FIGS. 10A-10B illustrate one example configuration for adjustable shear-resistant couplings between a front cover assembly and a housing component. However, it will be understood that other configurations are also contemplated. For example, in some cases the recesses in the housing component are omitted, and the coupling plates 1022 slide along a rear or interior surface of the housing component 1008. Further, the particular design dimensions and manufacturing tolerances of the components may be selected to achieve target performance and outcomes. For example, the positioning tolerance of the pins may be less than the maximum allowable misalignment between the pins and the coupling plates, such that any properly manufactured front cover assembly will cause the coupling plates to self-align (e.g., due to the pins being inserted into the coupling plates) when the front cover assembly is positioned in its target position on the housing component 1008.

As described herein, a display portion may include both front and rear covers formed from glass. For example, front and rear cover assemblies, each including a glass cover, may be positioned in openings in a housing component. The front and rear glass covers define front and rear exterior surfaces of the display portion, and may be at least partially surrounded about their peripheries by the housing component.

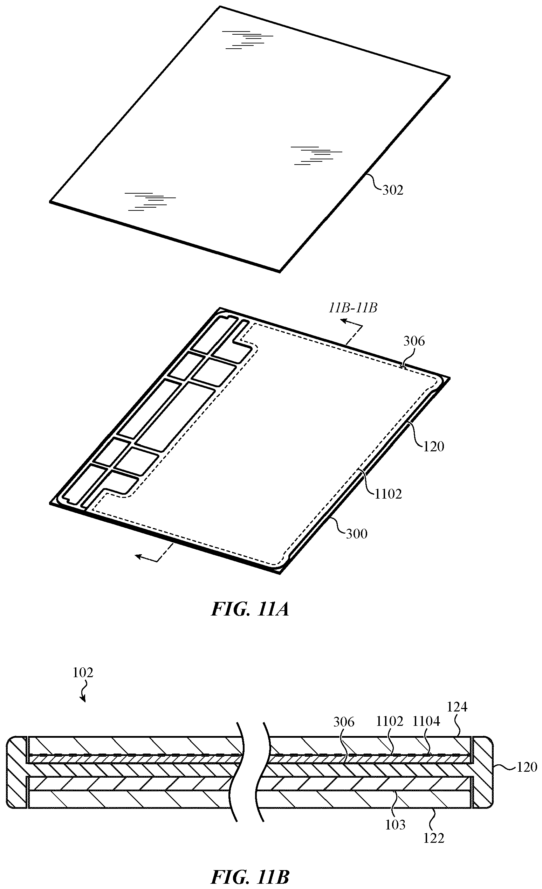

Attachment techniques for coupling a front cover assembly to a housing component are described, for example, with respect to FIGS. 9A-10B. FIGS. 11A-11B illustrate an example technique for coupling a rear cover assembly to a housing component.

FIG. 11A depicts a partial exploded view of the display portion 102, showing the front cover assembly 300 coupled to the housing component 120, and the rear cover assembly 302 separate from the housing component 120. As described above, the housing component 120 may define a mid-chassis 306, which may be or may include a plate-like structure that is between the front cover assembly 300 and the rear cover assembly 302. In some cases, the rear cover assembly 302 is coupled to the housing component 120 via one or more adhesives. For example, an adhesive 1102 may be positioned on the mid-chassis 306 to adhere to the rear cover assembly 302. The plate-like structure of the mid-chassis 306 may define a relatively large surface area, and the adhesive 1102 may extend over substantially all of the plate-like structure of the mid-chassis 306. Thus, the adhesive bond between the housing component 120 and the rear cover assembly 302 may provide a strong and secure coupling. In some cases, the adhesive bonding area, represented by the broken lines in FIG. 11A, is greater than about 50% of the surface area of the rear surface of the rear cover assembly 302, or greater than about 60% of the surface area of the rear surface of the rear cover assembly 302, or greater than about 75% of the surface area of the rear surface of the rear cover assembly 302. As described herein, an adhesive (e.g., the adhesive 204, FIG. 2) may also be positioned between the rear cover assembly 302 and the housing component 120 along a ledge (e.g., the ledge 205 in FIG. 2) near the periphery of the rear cover assembly 302. The adhesives 1102, 204 may be different adhesives, or they may be the same adhesive. In some cases, the adhesive 204 has different physical properties than the adhesive 1102. For example, the adhesive 204 may have better sealing properties than the adhesive 1102 (e.g., to facilitate an environmental seal along the perimeter of the rear cover assembly 302), while the adhesive 1102 may have a higher bond strength and/or may define a more rigid coupling than the adhesive 204 (e.g., to facilitate a secure structural bond between the housing component 120 and the rear cover assembly 302).

FIG. 11B depicts a partial cross-sectional view of the display portion 102, viewed along line 11B-11B in FIG. 11A. As shown in FIG. 11B, an adhesive 1102 may be positioned between the mid-chassis 306 and the rear cover 124 of the rear cover assembly 302. FIG. 11B also depicts a masking structure 1104 that may be positioned on an interior surface of the rear cover 124. While the masking structure 1104 is represented by a broken line, it will be understood that the masking structure 1104 may be continuous along the interior surface. In some cases, the masking structure 1104 may be discontinuous or otherwise define openings or regions of different composition (e.g., having more, fewer, or different masking layers as compared to other regions). Such regions may be used to define icons, logos, text, shapes, or to provide access to underlying light sources (e.g., to produce an illuminated logo region). The masking structure 1104 may be opaque in at least some regions.

The masking structure 1104 may include one or more layers of material. The materials may include ink, paint, dyes, deposited coating layers (e.g., produced via chemical vapor deposition, plasma vapor deposition, etc.), metal or metallic layers, or the like.

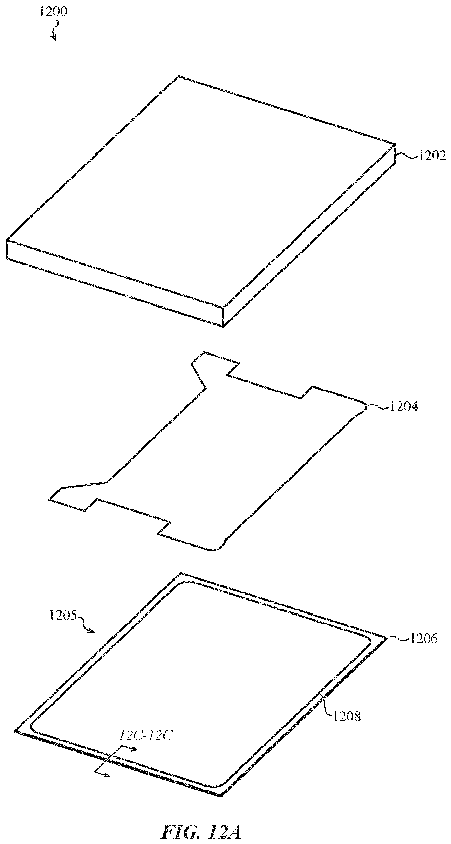

FIG. 12A is an exploded view of another example display portion 1200. The display portion 1200 includes a front cover assembly 1205, a mounting structure 1204, and a housing component 1202. The front cover assembly 1205 includes a front cover 1206 and a display 1208. The front cover 1206 may be formed from glass or another transparent material (e.g., ceramic, glass ceramic, a polymer, etc.), and may define at least a portion of the front exterior surface of the display portion 1200. The display 1208 may be coupled to the front cover 1206 and may display graphical outputs that are visible in a display region of the front cover 1206. The display 1208 may include various display components, such as liquid crystal display (LCD) components, light source(s) (e.g., light emitting diodes (LEDs), organic LEDs (OLEDs)), filter layers, polarizers, light diffusers, covers (e.g., glass or plastic cover sheets), circuit layers, electrode layers, and the like. The display 1208 may also include other components such as structural components that support any of the aforementioned components.

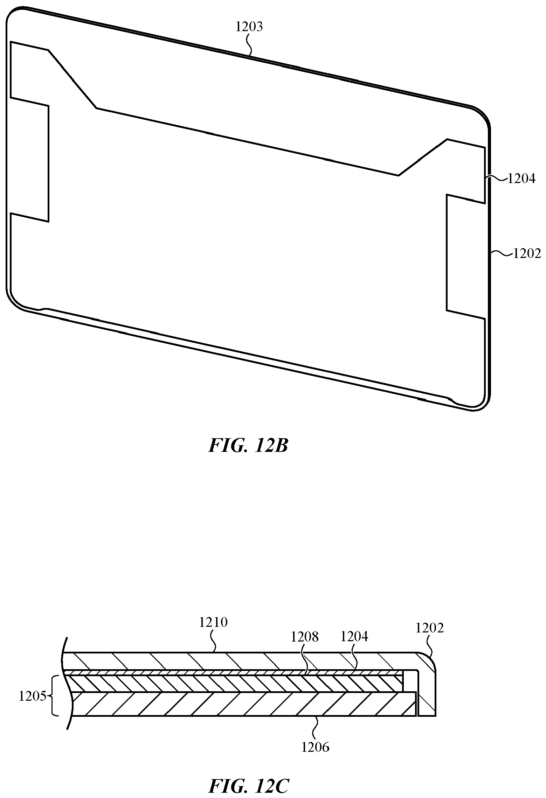

The housing component 1202 may be a unitary structure formed from a material such as metal (e.g., aluminum, steel, titanium, a metal alloy, etc.). The housing component 1202 may define a rear surface 1210 (FIG. 12C) of the display portion 1200, as well as a peripheral wall structure. The housing component 1202 may define a front-facing opening in which the front cover assembly 1205 may be positioned.

The mounting structure 1204 may be coupled to the housing component 1202 and may improve one or more structural characteristics of the display portion 1200. For example, the mounting structure 1204 may increase the stiffness of the display portion 1200. In some cases, the mounting structure 1204 is formed from a composite material, such as a fiber-reinforced polymer (e.g., carbon-fiber reinforced polymer, aramid fiber reinforced polymer, glass-fiber reinforced polymer, ceramic-fiber reinforced polymer, etc.). In some cases, the mounting structure 1204 is formed of metal, a polymer, or another suitable material or combination of materials. The mounting structure 1204 may be coupled to the housing component 1202 via adhesives, fasteners, interlocking features, and the like.

FIG. 12B illustrates the housing component 1202 with the mounting structure 1204 coupled thereto. In this example, the housing component 1202 defines a pattern of ribs 1203 extending from an interior surface of the housing component 1202. The ribs 1203 may increase the stiffness and/or strength of the housing component 1202 (relative to a housing component lacking ribs 1203). The ribs 1203 may be an integral structure of the housing component 1202 (e.g., the housing component 1202 and its ribs may be a single molded structure or machined from a single piece of metal).

The mounting structure 1204 may be coupled to the ribs 1203. The ribs 1203 may define a standoff distance between the rear wall of the housing component 1202 and the mounting structure 1204. The standoff distance may help improve the structural characteristics of the display portion, as it may increase the moment of inertia of the assembly (e.g., the housing component 1202 and the mounting structure 1204), thereby increasing its stiffness.

FIG. 12C depicts a partial cross-sectional view of the display portion 1200, viewed along line 12C-12C in FIG. 12A. As shown, the front cover assembly 1205 is coupled to the mounting structure 1204. For example, an adhesive may be positioned between the front cover assembly 1205 (e.g., the display 1208) and the mounting structure 1204. The front cover assembly 1205 may also be coupled to the housing component 1202, such with an adhesive on a ledge, as described with respect to FIG. 2, for example.

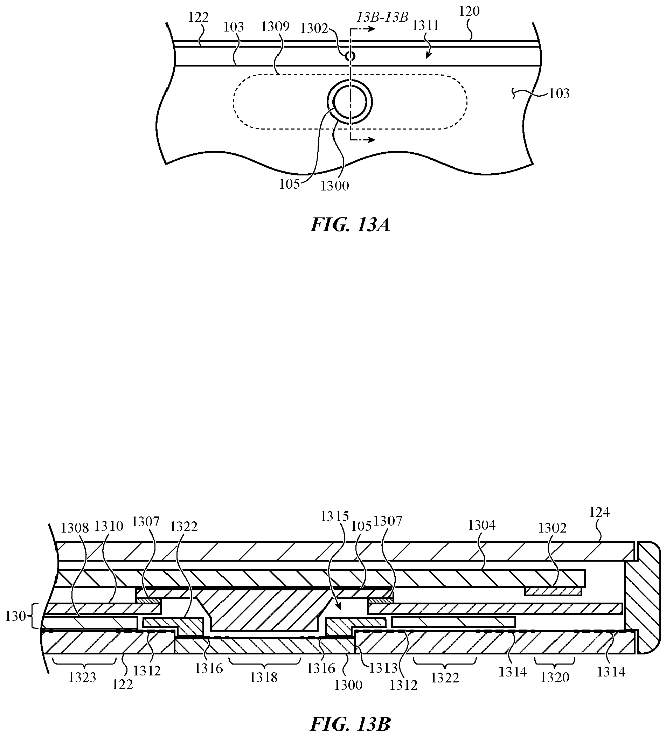

FIG. 13A depicts part of the display portion 102 of the device 100, and in particular, a portion of the display portion 102 that includes the camera 105. As noted above, the camera 105 may capture images (e.g., still or video images) of a user, such as for videoconferencing purposes. The camera 105 may be positioned in the display portion such that it is generally aimed at a user of the device 100 when the device is in use.

As shown in FIG. 13A, the camera may be positioned in an active display region of the display 103. For example, the active display region may surround the camera such that graphical outputs can be produced around the entire perimeter of the camera. Thus, for example, a graphical user interface that is displayed by the display 103 may extend around the camera, even between the camera and the top side of the housing component 120. In some cases, the graphical user interface may incorporate the camera into graphical elements of the graphical user interface. For example, the graphical user interface may display a notification region 1309 that surrounds or otherwise includes part or all of the camera 105 (and/or an associated camera window and/or mask region). The notification region 1309 may appear as a distinct graphical area within the graphical user interface (e.g., a region with a black background). Various types of information may be included in the notification region 1309. For example, the notification region 1309 may be displayed in response to an incoming message (e.g., text message, email message, etc.), and may include a preview of the message (e.g., a name, phone number, or address of the sender, a subject of the message, a portion of the message, etc.). As another example, the notification region 1309 may be displayed in response to an application alert, and may include information from the application alert. For example, a weather application may initiate an application alert to inform the user of a forecasted weather event, and the notification region 1309 may be displayed to present information about the forecasted weather event. Due to the presence of the camera 105 in the notification region 1309, the information displayed in the notification region may be displayed such that the graphically inactive area corresponding to the camera 105 is less perceptible. For example, the graphically inactive area corresponding to the camera 105 may be positioned where an empty space would be expected based on the arrangement of graphical outputs in the notification region 1309.

As shown in FIG. 13A, the device 100 may also include an indicator light 1302 positioned in a mask region 1311 that extends around the active display area of the display portion 102. In some cases, the mask region 1311 extends around an entire periphery of the active display area. The indicator light 1302 may indicate a status of a device, system, or component of the device 100. For example, the indicator light 1302 may be active (e.g., emitting light) when a camera and/or microphone of the device 100 is active (e.g., capturing images and/or audio or capable of capturing images and/or audio). The indicator light 1302 may include one or more color output modes to indicate the status of different devices (e.g., a first color indicates an active camera, and a second color indicates an active microphone).

FIG. 13B depicts a partial cross-sectional view of the display portion 102, viewed along line 13B-13B in FIG. 13A. As depicted in FIG. 13B, the front cover 122 defines a hole 1313 in which a camera cover 1300 is positioned. The front cover 122 and camera cover 1300 together may define a cover structure. The camera cover 1300 may include a transparent material, such as glass, glass ceramic, sapphire, a transparent ceramic, a polymer, or another suitable transparent material. The hole 1313 in the front cover 122 and the camera cover 1300 may define a recess to allow greater clearance for the camera 105, and/or to allow a thinner overall dimension for the display portion 102. For example, the front cover 122 may have a first thickness, and the camera cover 1300 may have a second thickness that is less than the first thickness. In some cases, the camera cover 1300 is about 50% as thick as the front cover 122, about 60% as thick as the front cover 122, about 75% as thick as the front cover 122, or another suitable thickness. The camera cover 1300 may be positioned in the hole 1313 such that the front surface of the camera cover 1300 is substantially flush with the front surface of the front cover 122, resulting in a recess along the rear or interior surface of the front cover 122. By providing the recess, the camera 105 may be positioned closer to the front cover 122 (while still providing any necessary clearance between the camera 105 and the camera window). This may allow the use of a larger camera (e.g., with better imaging capabilities) for a given display portion thickness. Alternatively, a thinner display portion may be used for a given camera size.

The thickness of the front cover 122 may be between about 0.3 mm and about 0.6 mm. The thickness of the camera window 1300 may be between about 0.15 and about 0.3 mm. In some cases, the camera window 1300 may be about 50% of the thickness of the front cover 122, or about 40% of the thickness of the front cover, or about 60% of the thickness of the front cover. Other relative thicknesses are also contemplated.

As described above, the camera 105 may be positioned in an active display of the display. As shown in FIG. 13B, the display 103 may define a hole 1315 through the active area of the display. As shown in FIG. 13B, the active area may include areas 1322 and 1323. The hole 1315 may extend through both a display component 1308 of the display 103 and a touch-sensing component 1310 of the display 103. (The display component 1308 and the touch-sensing component 1310 may be coupled together, such as via adhesive, or may be arranged differently than shown in FIG. 13B, such as with the touch-sensing component 1310 between the front cover 122 and the display component 1308.) Thus, the active areas of the display around the camera window 1300 may be both graphically active and touch-sensitive.

The camera 105 may be positioned on a substrate 1304, and may be coupled to the display 103 (e.g., via adhesive 1307). The camera 105 (e.g., a lens assembly of the camera) may extend through the hole 1315 in the display 103, and into the recess defined by the camera window 1300.

Masks may be positioned on the interior or rear surfaces of the front cover 122 and/or the camera window 1300. The masks may be opaque such that underlying components are not visible through the transparent front cover and camera window 1300. Masks, also referred to as masking structures, may include one or more layers of material. The materials may include ink, paint, dyes, deposited coating layers (e.g., produced via chemical vapor deposition, plasma vapor deposition, etc.), metal or metallic layers, or the like.

FIG. 13B illustrates an example arrangement of masks on the front cover 122 and the camera window 1300. For example, a mask 1312 may surround the hole 1313 through the front cover 122. A mask 1316 may be positioned about the outer perimeter of the camera window 1300. The mask 1316 may define a camera opening 1318 (e.g., a transparent region) that allows the camera 105 to receive light to capture images.

The masks 1312 and 1316 may have the same or similar appearance (e.g., color, texture, reflectivity, sheen, etc.), such that they appear to be a single mask structure. In some cases, the masks 1312 and 1316 include the same material(s). In some cases, the masks 1312 and 1316 include different materials. The masks 1312 and 1316 may occlude various internal structures of the device 100. For example, the masks 1312 and 1316 may occlude the edges of the display 103 proximate the hole 1315, as well as the mounting structure 1322 that couples the camera window 1300 to the front cover 122.

The mask 1314 may define the mask region 1311 that extends around the active display area of the display portion 102. The mask 1314 may also define a hole 1320 for the indicator light 1302 (FIG. 13A). The indicator light 1302 may include one or more LEDs or other light emitting components. The indicator light 1302 may be coupled to the same substrate 1304 that the camera 105 is coupled to (as shown in FIG. 13B), or it may be coupled to a separate substrate.

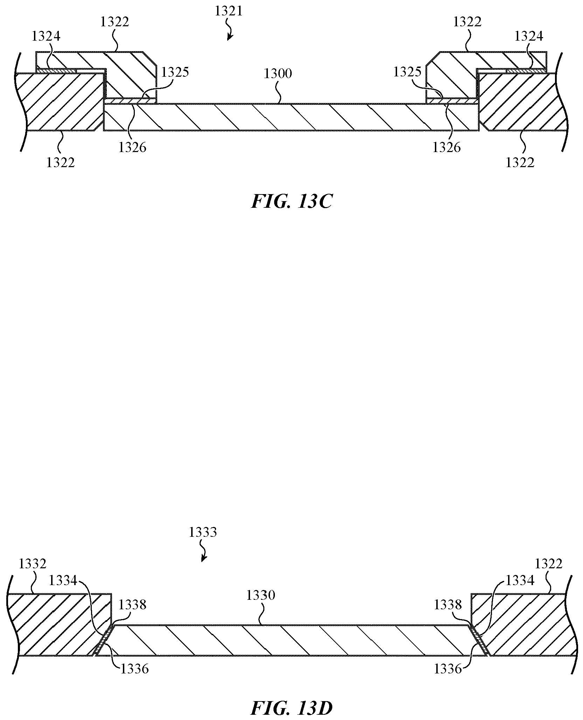

As described herein, a mounting structure 1322 may couple a camera window 1300 to the front cover 122. FIG. 13C depicts a partial cross-sectional view of the front cover assembly, viewed along line 13C-13C, illustrating the mounting structure 1322. In particular, the mounting structure 1322 may be coupled to an interior surface of the front cover 122, and may define a ledge 1325 positioned in the hole 1313 in the front cover 122 (FIG. 13B). In some cases, the mounting structure 1322 is adhered to the interior surface of the front cover 122 via adhesive 1324. The camera window 1300 may be positioned in the hole 1313 and coupled to the ledge 1325 of the mounting structure 1322. In some cases, the camera window 1300 is coupled to the ledge 1325 via adhesive 1326. The adhesives 1324, 1326 may be pressure sensitive adhesives (PSA), heat sensitive adhesives (HSA), adhesive films, liquid adhesives, or the like. The adhesives 1324, 1326 may be the same or different adhesives.

The ledge 1325 may be positioned within the hole 1313 at a depth (measured from the front surface of the front cover 122) that will result in the front surfaces of the camera window 1300 and the front cover 122 being flush (e.g., being substantially coplanar). In some cases, the adhesive 1326 is introduced in a flowable or deformable state, and the camera window 1300 is positioned in the hole 1313 with its front surface flush to the front surface of the front cover 122 while the adhesive 1326 cures or otherwise hardens. In other cases, the adhesive 1326 is pre-formed at a target thickness such that the adhesive 1326 positions camera window 1300 flush with front surface of the front cover 122 when the camera window 1300 is placed on the ledge (e.g., the thickness of the camera window 1300 plus the pre-formed adhesive 1326 is equal to the depth of the surface of the ledge 1325 in the hole 1313). The adhesives 1324, 1326 may be positioned on masks 1312, 1316, such that the adhesives are not visible through the front surfaces of the front cover 122 and camera window 1300.

The mounting structure 1322 may define a recess 1321 into which a portion of the camera extends. For example, a portion of a lens or lens assembly may extend into the recess 1321.

FIG. 13D depicts another example technique for coupling a camera window to a front cover. In particular, FIG. 13D illustrates a front cover 1332 and a camera window 1330, which may be embodiments of the front cover 122 and camera window 1300, respectively, and the description of the front cover 122 and camera window 1300 will be understood to apply to the front cover 1332 and camera window 1330.

The front cover 1332 may define an angled mounting surface 1334, and the camera window 1330 defines a corresponding angled mounting surface 1336. The angled mounting surfaces 1334, 1336 may have angles that allow the camera window 1330 to be positioned in the hole in the front cover 1332 from the front side of the front cover 1332. Additionally, the angles of the angled mounting surfaces 1334, 1336 and the size of the hole and of the camera window 1330 (and the thickness of the adhesive 1338) may be configured so that the front surfaces of the front cover 1332 and the camera window 1330 are flush. The adhesive 1338 may be a flowable or deformable adhesive, or be a pre-formed structure (e.g., an adhesive film), and the camera window 1330 may be attached using the corresponding positioning techniques described with respect to FIG. 13C. In this example, a mounting structure (e.g., the mounting structure 1322) may be omitted.

The camera window 1330, being thinner than the front cover 1332, may define a recess 1333 into which a portion of the camera extends. For example, a portion of a lens or lens assembly may extend into the recess 1333.

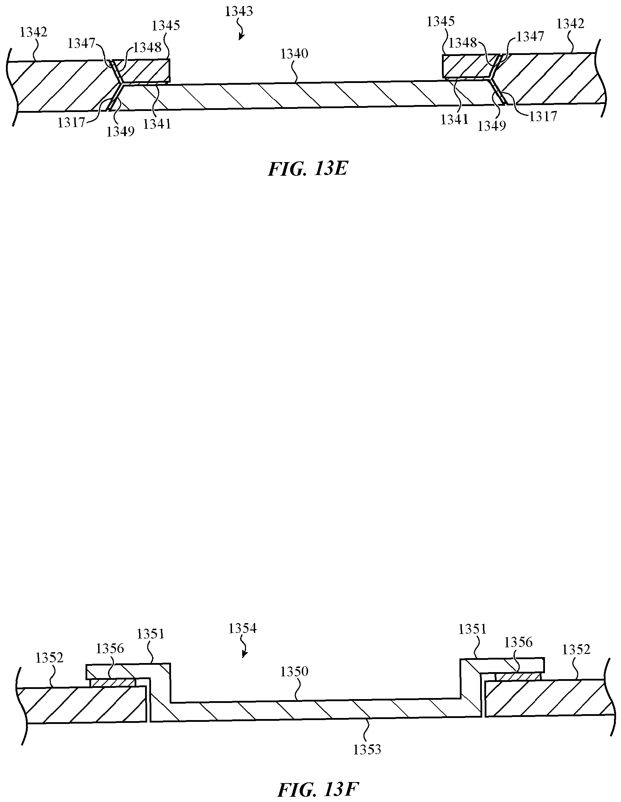

FIG. 13E depicts another example technique for coupling a camera window to a front cover. In particular, FIG. 13E illustrates a front cover 1342 and a camera window 1340, which may be embodiments of the front cover 122 and camera window 1300, respectively, and the description of the front cover 122 and camera window 1300 will be understood to apply to the front cover 1342 and camera window 1340.

The front cover 1342 may define an angled mounting surface 1317, and the camera window 1340 defines a corresponding angled mounting surface 1349. The angled mounting surfaces 1317, 1349 have angles that allow the camera window 1340 to be positioned in the hole in the front cover 1342 from the front side of the front cover 1342. Additionally, the angles of the angled mounting surfaces 1317, 1349 and the size of the hole and of the camera window 1340 (and the thickness of the adhesive 1341) may be configured so that the front surfaces of the front cover 1342 and the camera window 1340 are flush. The adhesive 1341 may be a flowable or deformable adhesive, or be a pre-formed structure (e.g., an adhesive film), and the camera window 1340 may be attached using the corresponding positioning techniques described with respect to FIG. 13C.

The front cover 1342 may also define an additional angled mounting surface 1347, and a mounting ring 1345 may define a corresponding angled mounting surface 1348. The mounting ring 1345 may be coupled to the interior side of the camera window 1340, and to the additional angled mounting surfaces 1347, via the adhesive 1341. The angled mounting surfaces of the front cover 1342 and the corresponding angled mounting surfaces of the camera window 1340 and the mounting ring 1345 define an interlocking structure that retains the camera window 1340 in position in the hole in the front cover 1342. For example, when adhered together, the camera window 1340 and the mounting ring 1345 together define a recess feature, and the front cover 1342 defines a protruding feature (e.g., a faceted protrusion) that extends into the recess feature. The dimensions of the protrusion and recess features are such that a mechanical interlocking structure is defined by the combination of the angled surfaces of the front cover, mounting ring, and camera window, thereby providing resistance to a camera window being displaced from the front cover.

The mounting ring 1345 and the camera window 1340 may define a recess 1343 into which a portion of the camera extends. For example, a portion of a lens or lens assembly may extend into the recess 1343.

FIG. 13F depicts another example technique for coupling a camera window to a front cover. In particular, FIG. 13F illustrates a front cover 1352 and a camera window 1350, which may be embodiments of the front cover 122 and camera window 1300, respectively, and the description of the front cover 122 and camera window 1300 will be understood to apply to the front cover 1352 and camera window 1350.

In this example, the camera window 1350 defines a window portion 1353 and a mounting flange 1351. The window portion 1353 is thinner than the front cover 1352, as described above, such that when attached to the front cover 1352, the camera window 1350 defines a recess 1354 into which a portion of the camera extends. For example, a portion of a lens or lens assembly may extend into the recess 1354.

The camera window 1350 may be coupled to the front cover 1352 via the mounting flange 1351. For example, the camera window 1350 may be adhered to the interior surface of the front cover 1352 via an adhesive 1356. The adhesive 1356 may be a flowable or deformable adhesive, or be a pre-formed structure (e.g., an adhesive film), and the camera window 1350 may be attached using the corresponding positioning techniques described with respect to FIG. 13C.

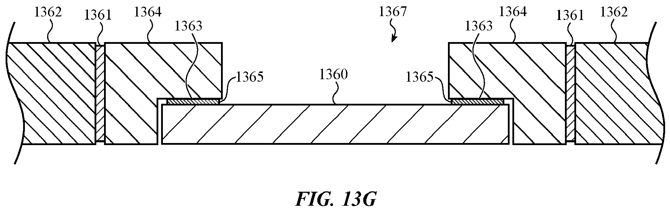

FIG. 13G depicts another example technique for coupling a camera window to a front cover. In particular, FIG. 13G illustrates a front cover 1362 and a camera window 1360, which may be embodiments of the front cover 122 and camera window 1300, respectively, and the description of the front cover 122 and camera window 1300 will be understood to apply to the front cover 1362 and camera window 1360.

The camera window 1360 may be coupled to the front cover 1362 via a mounting structure 1364. The mounting structure 1364 may be coupled to the front cover 1362 via an adhesive 1361. The adhesive 1361 may be a flowable or deformable adhesive, or be a pre-formed structure (e.g., an adhesive film). The mounting structure 1364 may be coupled to the front cover 1362 along a butt joint (e.g., the mounting structure 1364 and the front cover 1362 may define parallel mounting surfaces that are perpendicular to the front surface of the front cover 1362), as shown in FIG. 13G. In other cases, the mounting structure 1364 and/or the front cover 1362 define other engagement features. For example, the mounting structure 1364 may define a mounting flange (e.g., similar to the mounting structure 1322), or the mounting structure 1364 and the front cover 1362 may define corresponding angled surfaces (similar to the FIG. 13D).

The camera window 1360 may be coupled to a mounting ledge 1363 of the mounting structure 1364. For example, the camera window 1360 may be adhered to the mounting ledge 1363 via an adhesive 1365. The adhesive 1365 may be a flowable or deformable adhesive, or be a pre-formed structure (e.g., an adhesive film), and the camera window 1360 may be attached using the corresponding positioning techniques described with respect to FIG. 13C.

As shown in FIG. 13G, the mounting structure 1364 may define part of a front exterior surface of the front cover assembly. The front surfaces of the front cover 1362, the mounting structure 1364, and the camera window 1360 may be substantially flush. The front surface of the mounting structure 1364 may define a ring around the camera window 1360 as viewed from the front of the front cover assembly.

The mounting structure 1364 and the camera window 1360 may define a recess 1367 into which a portion of the camera extends. For example, a portion of a lens or lens assembly may extend into the recess 1367.

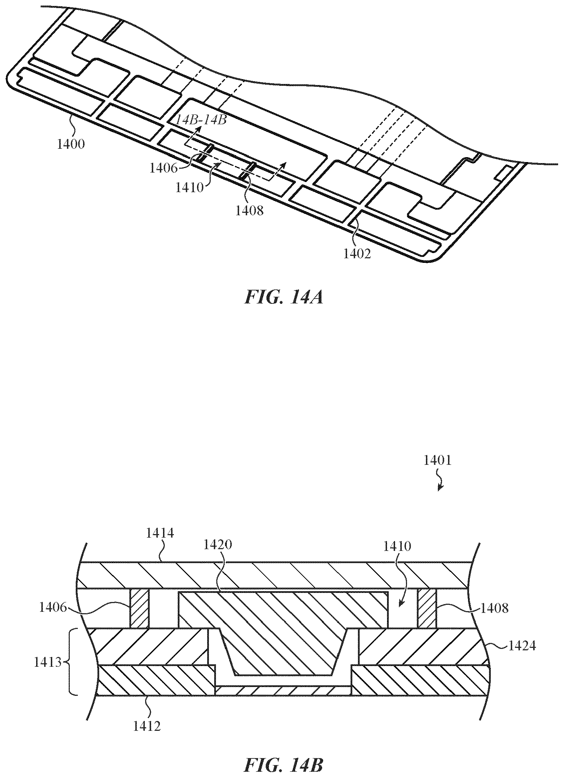

As described above, a mid-chassis may define a web structure that defines holes to accommodate components of a front cover assembly. FIGS. 14A-14B illustrate an example mid-chassis 1400 that defines a web structure 1402 that includes web segments 1406, 1408 that at least partially define a camera mounting chamber 1410 in which a camera 1420 (e.g., a front-facing camera) may be positioned.

FIG. 14B depicts a partial cross-sectional view of a display portion 1401 that includes the mid-chassis 1400 (FIG. 14A), a camera 1420, a front cover 1412, a display 1424, and a rear cover assembly 1414. The view of FIG. 14B corresponds to a view along line 14B-14B in FIG. 14A. The web segments 1406, 1408 may extend from the front cover assembly 1413 (e.g., from the display 1424 or another component or layer of a front cover assembly 1413) to the rear cover assembly 1414. By extending from the front cover assembly 1413 to the rear cover assembly 1414, the web segments 1406, 1408 may define a fixed height camera mounting chamber 1410 that prevents or inhibits compressive forces applied to the display portion 1401 from being transferred to the camera 1420. For example, compressive forces, such as from a user attempting to close a computer by pushing the display portion 1401 down against the base portion, may be transferred through the web segments 1406, 1408, rather than being imparted to the camera 1420. In some cases, the web segments 1406, 1408 have a greater height (e.g., the vertical dimension, as depicted in FIG. 14B) than other segments of the web structure 1402. For example, other web segments may not extend from the front cover assembly 1413 to the rear cover assembly 1414.

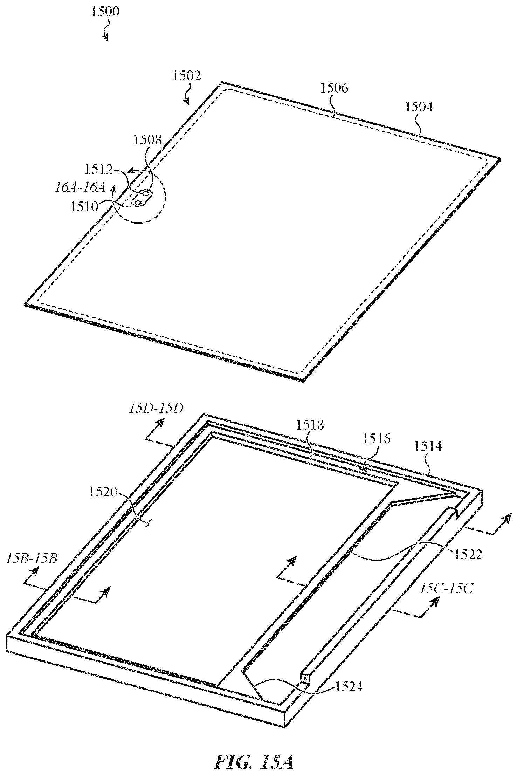

FIG. 15A is an exploded view of another example display portion 1500, which may be an embodiment of the display portion 102, 1000, 1200, or any other display portion described herein. The display portion 1500 includes a front cover assembly 1502 and a housing component 1514. The front cover assembly 1502 includes a front cover 1504 and a display 1506. The front cover 1504 may be formed from glass or another transparent material (e.g., ceramic, glass ceramic, a polymer, etc.), and may define at least a portion of the front exterior surface of the display portion 1500. The display 1506 may be coupled to the front cover 1504 and may display graphical outputs that are visible in a display region of the front cover 1504. The display 1506 may include various display components, such as liquid crystal display (LCD) components, light source(s) (e.g., light emitting diodes (LEDs), organic LEDs (OLEDs)), filter layers, polarizers, light diffusers, covers (e.g., glass or plastic cover sheets), circuit layers, electrode layers, and the like. The display 1506 may also include other components such as structural components that support any of the aforementioned components.

The display portion 1500 may include a front-facing sensor region 1508, which may include a first sensing system 1510 and a second sensing system 1512. The first sensing system 1510 may be an ambient light sensing system, and the second sensing system 1512 may be a camera. One or both of the sensing systems may be replaced with an output system, such as a flash, illuminator module, or the like. Other example systems that may be included in the front-facing sensor region 1508 include biometric sensing systems (e.g., face recognition systems, fingerprint recognition systems), proximity sensing systems, three-dimensional gesture recognition systems, and the like.

The housing component 1514 may be a unitary structure formed from a material such as metal (e.g., aluminum, steel, titanium, a metal alloy, etc.). The housing component 1514 may define a rear surface of the display portion 1500, as well as a peripheral wall structure. The housing component 1514 may define a front-facing opening in which the front cover assembly 1502 may be positioned.

The housing component 1514 may define mounting surfaces 1516 to which the front cover assembly 1502 may be attached. For example, the front cover assembly 1502 may be attached to the mounting surfaces 1516 via one or more adhesives, as described herein. In some cases, the front cover assembly 1502 is coupled to the housing component 1514 by adhesives that contact interior surfaces of the display 1506 (e.g., instead of or in addition to coupling to the front cover 1504). By adhering to the interior surface of the display 1506 (e.g., rather than a peripheral region of the interior surface of the front cover 1504), the size of the graphically inactive borders around the display region of the display may be reduced, as the display 1506 can extend into the area that would otherwise be reserved for adhering to the front cover 1504.

The housing component 1514 may also define a rear wall 1520 that defines at least a portion of (and optionally all of) a rear side of the display portion 1500. The rear wall 1520 may also define a bottom surface of a cavity 1518 in the housing component 1514. The cavity 1518 may be surrounded on substantially all sides by the mounting surfaces 1516. The cavity 1518 may provide weight reduction to a unitary part and may provide clearance for other components, such as stiffeners, foams, display components, electronics, and the like. The housing component 1514 may also define a cavity 1524, which may provide clearance for components of the display portion 1500.

In some cases, the housing component 1514 may include one or more ribs, such as the rib 1522. The rib 1522 may partially define the cavities 1518, 1524, and may define a boundary between the cavities. Ribs may also define portions of the mounting surfaces (e.g., the mounting surface 1516), and as such, portions of the front cover assembly 1502 (and more particularly the display 1506) may be adhered to or otherwise coupled to the mounting surfaces defined by the ribs.

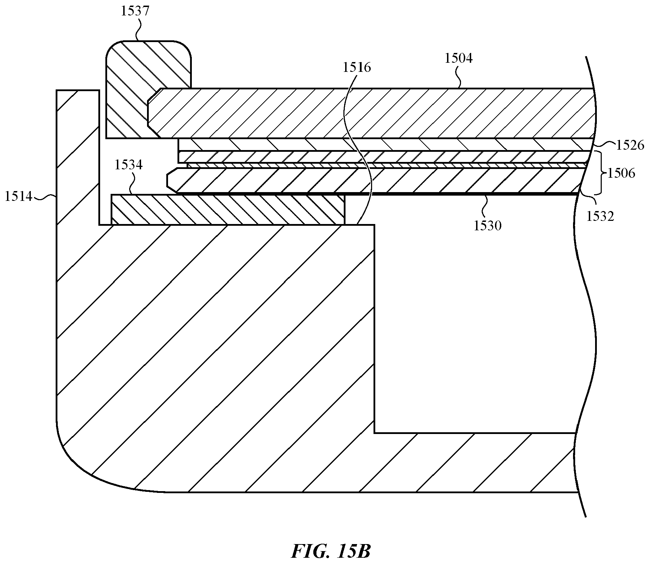

FIG. 15B is a partial cross-sectional view of the display portion 1500, viewed along line 15B-15B in FIG. 15A. FIG. 15B illustrates an example coupling between the front cover assembly 1502 and the housing component 1514. The display 1506 is coupled to the front cover 1504, such as via adhesive 1526 (e.g., an optically clear adhesive). The display 1506 is also coupled to the mounting surfaces 1516 via adhesive structure 1534. The adhesive structure 1534 may be or may include a pressure sensitive adhesive (PSA), heat sensitive adhesive (HSA), a flowable adhesive (e.g., an epoxy), adhesive tape, or the like. In some cases, the adhesive structure 1534 includes multiple layers and/or materials, such as a compliant (e.g., foam) core with adhesives along the top and bottom surfaces of the core. The adhesive structure 1534 may be configured to conform to a variable gap size. For example, a flowable adhesive may be positioned between the display 1506 and the mounting surface 1516, and the front cover assembly 1502 may be positioned at a target position relative to the housing component 1514 (e.g., so that the front surface of the front cover 1504 is flush with the wall of the housing component 1514). The flowable adhesive may conform to the gap (including accounting for any variations in the distance between the mounting surface 1516 and the front cover 1504) and cure or otherwise harden within the defined space.

Because the display 1506 (and not the front cover 1504) is adhered to the mounting surface 1516, the display 1506 may extend further towards the perimeter of the front cover 1504 than may be possible or practical in implementations where the front cover 1504 is adhered to the mounting surface. More particularly, by bonding directly to the display 1506, it is not necessary to provide a bonding surface on the periphery of the front cover 1504 itself. In some cases, the display 1506 extends to within a target distance from the perimeter of the front cover 1504. The target distance may be less than about 10 mm, less than about 5 mm, less than about 4 mm, less than about 3 mm, less than about 2 mm, or less than about 1 mm. In some cases, the display extends fully to the perimeter of the front cover 1504.

The display 1506 may include various components, such as a substrate 1532 (e.g., glass), liquid crystal display (LCD) components, light source(s) (e.g., light emitting diodes (LEDs), organic LEDs (OLEDs)), filter layers, polarizers, light diffusers, covers (e.g., glass or plastic cover sheets), circuit layers, electrode layers, and the like. The display 1506 may also include outer layer(s) 1530. The outer layer(s) 1530 may include an ink or other opaque material that is bonded to the display 1506. In some cases, the outer layer(s) 1530 extend along an entire or substantially an entire surface of the display 1506 (and may thus define all or part of the rear- or interior-facing surface of the display 1506). In some cases, the adhesive 1534 is adhered directly to the outer layer(s) 1530. In some cases, the outer layer(s) 1530 are removed or absent from some locations along the interior surface of the display 1506 to allow the adhesive 1534 to contact underlying layers or materials.

In some cases, the outer layer(s) 1530 include graphite layers. The graphite layers may be configured to provide thermal regulation to the display 1506, such as by absorbing and/or distributing heat from the display 1506. In some cases, where the adhesive 1534 is configured to bond to the display 1506, the graphite may be absent, such that the adhesive 1534 bonds to materials and/or components other than graphite. For example, the graphite material may define a pattern that includes spaces (e.g., holes, notches, etc.) where underlying materials and/or components are exposed to allow the adhesive 1534 to bond directly to the underlying materials and/or components.

The display portion 1500 may also include a gasket 1537, which may be an embodiment of the gasket 202. The gasket may be positioned between the outer periphery of the front cover 1504 and a lip or flange portion of the housing component 1514. The gasket 1537 may protrude past the front exterior surface of the front cover 1504, and may prevent or reduce the likelihood of the front cover 1504 contacting a base portion. The gasket 1537 may also prevent or inhibit the peripheral sides of the front cover 1504 from contacting the surrounding lip or flange portion of the housing component 1514. The gasket 1537 may be formed from a polymer material, and may provide a degree of compliance between the various structures and components that it contacts and/or is positioned between. The gasket 1537 may be bonded directly to the side surface (and optionally a portion of the front surface) of the front cover 1504. In some cases, the gasket 1537 is overmolded on the front cover 1504.

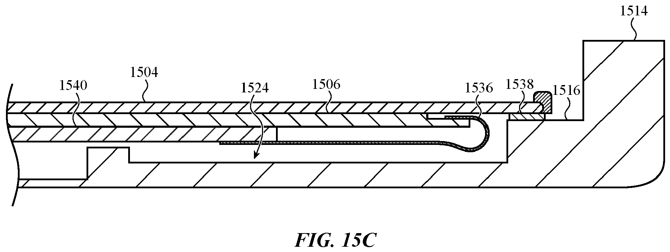

FIG. 15C is a partial cross-sectional view of the display portion 1500, viewed along line 15C-15C in FIG. 15A. In some areas of the front cover assembly 1502, it may not be feasible to bond directly to the display 1506. For example, as shown in FIG. 15C, the display 1506 may include a first circuit element 1536 (e.g., a flexible circuit board) that extends from an edge of the display 1506 and couples to a second circuit element 1540 (e.g., a circuit board). The first circuit element 1536 may conductively couple components of the display 1506 (e.g., electrode layers, light emitting diodes, circuit layers, etc.) to the second circuit element 1540. The first circuit element 1536 may form a loop where it exits the display 1506 and couples to the second circuit element 1540. At those locations, there may not be a suitable surface on the display 1506 to bond to the housing component 1514. In such locations, adhesive 1538 may bond to the housing component 1514 and to the front cover 1504. The front cover 1504 may include a mask structure (e.g., ink, one or more films, layers, etc.) along the interior surface at the location of the adhesive 1538. The adhesive 1538 may bond to the mask structure, and the mask structure may prevent the adhesive 1538 from being visible through the front cover 1504.

As described above, the housing component 1514 may define cavities or recesses, such as the recess 1524, to provide clearances to accommodate components of the front cover assembly 1502. FIG. 15C illustrates the flexible circuit element 1536 extending into the cavity 1524.

The adhesive 1538 may be the same adhesives as the adhesive 1534 shown in FIG. 15B. In some cases, the adhesives 1534, 1538 are different regions of a single, contiguous adhesive structure. For example, the adhesives 1534, 1538 may define a continuous that extends around the entire periphery of the front cover assembly 1502 to attach the front cover assembly 1502 to the housing component 1514.

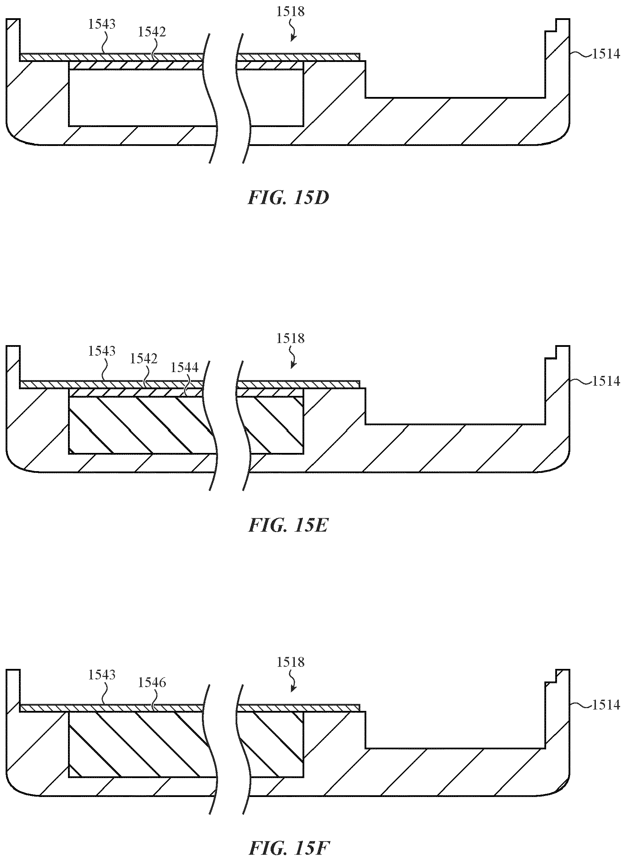

FIGS. 15D-15F are partial cross-sectional views of the display portion 1500, viewed along line 15D-15D in FIG. 15A, illustrating example configurations of the housing component 1514. In particular, in some cases, the display portion 1500 may include components that at least partially fill and/or cover cavities in the housing component 1514. Such components may provide structural advantages, such as by improving the stiffness, strength, rigidity, or other structural property (as compared to a cavity without a filling or cover, for example). Such components may also provide additional surface area between the front cover assembly 1502 and the housing component 1514 to accommodate additional adhesive to bond the front cover assembly 1502 to the housing component 1514.

FIG. 15D illustrates the housing component 1514 with a cover member 1542 extending over the cavity 1518. The cover member 1542 may be a metal, polymer, composite, or any other suitable material. The cover member 1542 may be secured to the housing component 1514 via adhesives, fasteners (e.g., screws, bolts, rivets, etc.), welding, soldering/brazing, or the like. As noted above, the cover member 1542 may provide structural rigidity and/or strength to the housing component 1514. Further, adhesive 1543 may be positioned on the cover member 1542 to bond to an interior side of the display 1506, as described above. The adhesive 1543 that is used between the cover member 1542 and the display 1506 may be a flowable adhesive, an adhesive film, or the like. The adhesive 1543 may extend over the mounting surface of the housing member (e.g., the adhesive 1534, FIG. 15B, may be part of the adhesive 1543). In other examples, the adhesive 1534 and the adhesive 1543 may be discontinuous (e.g., formed of different adhesives and/or different adhesive components).

FIG. 15E illustrates the housing component 1514 with a fill material 1544 within the cavity 1518 and the cover member 1542 extending over the cavity 1518. The fill material 1544 may be configured to provide structural rigidity and/or strength to the housing component 1514. The fill material 1544 may be a sheet-like material (e.g., a single sheet of a polymer foam), or it may define distinct structural features and/or shapes, such as a rib structure, honeycomb, or the like. The fill material 1544 may be formed from or include any suitable material, such as polymer, foam, composite, metal, or the like. The fill material 1544 may be secured to the housing component 1514 via adhesives, fasteners (e.g., screws, bolts, rivets, etc.), welding, soldering/brazing, or the like.

The cover member 1542 may be a metal, polymer, composite, or any other suitable material. The cover member 1542 may be secured to the housing component 1514 (and optionally the fill material 1544) via adhesives, fasteners (e.g., screws, bolts, rivets, etc.), welding, soldering/brazing, or the like. As noted above, the cover member 1542 may provide structural rigidity and/or strength to the housing component 1514. Further, adhesive 1543 may be positioned on the cover member 1542 to bond to an interior side of the display 1506, as described above. The adhesive 1543 that is used between the cover member 1542 and the display 1506 may be a flowable adhesive, an adhesive film, or the like. The adhesive 1543 may extend over the mounting surface of the housing member (e.g., the adhesive 1534, FIG. 15B, may be part of the adhesive 1543). In other examples, the adhesive 1534 and the adhesive 1543 may be discontinuous (e.g., formed of different adhesives and/or different adhesive components).

FIG. 15F illustrates the housing component 1514 with a fill material 1546 within the cavity 1518. In this example, the cover member 1542 is omitted, and the fill material 1546 defines an exposed surface. The display may be adhered to the exposed surface of the fill material.

The fill material 1546 may be configured to provide structural rigidity and/or strength to the housing component 1514. The fill material 1546 may be a sheet-like material (e.g., a single sheet of a polymer foam), or it may define distinct structural features and/or shapes, such as a rib structure, honeycomb, or the like. The fill material 1546 may be formed from or include any suitable material, such as polymer, foam, composite, metal, or the like. The fill material 1546 may be secured to the housing component 1514 via adhesives, fasteners (e.g., screws, bolts, rivets, etc.), welding, soldering/brazing, or the like. As noted above, adhesive 1543 may be positioned on the fill material 1546 to bond to the interior side of the display 1506, as described above. The adhesive 1543 that is used between the fill material 1546 and the display 1506 may be a flowable adhesive, an adhesive film, or the like. The adhesive 1543 may extend over the mounting surface of the housing member (e.g., the adhesive 1534, FIG. 15B, may be part of the adhesive 1543). In other examples, the adhesive 1534 and the adhesive 1543 may be discontinuous (e.g., formed of different adhesives and/or different adhesive components).

While FIGS. 15D-15F illustrate an adhesive 1543 that extends along the cavity cover/fill, such adhesive is optional. In cases where the adhesive 1543 is omitted, the adhesive 1534 around the periphery of the front cover assembly 1502 may attach the front cover assembly 1502 to the housing component 1514, as described above.

The adhesives that are used to attach the front cover assembly 1502 to the housing component 1514 may be configured to allow detachment of the front cover assembly 1502 from the housing component 1514 under certain circumstances. For example, the adhesives may be configured so that their bond strength weakens when exposed to heat. The front cover assembly 1502 may have a mode in which it can produce heat specifically to weaken the adhesive. Such mode may be accessed by a technician in order to replace or repair components. Heat may also be provided by an external source. In some cases, the adhesives may be configured so that their bond strength weakens when exposed to an electrical field or electrical signal. In such cases, the front cover assembly 1502 may have a mode in which it can produce the electrical field or electrical signal specifically to weaken the adhesive. Such mode may be accessed by a technician in order to replace or repair components. The electrical field or signal may also be provided by an external source.

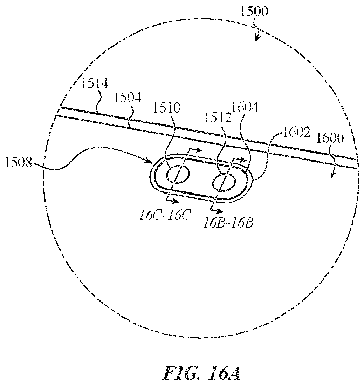

FIG. 16A is a detail view of area 16A-16A in FIG. 15A, showing the front-facing sensor region 1508. As noted above, the front-facing sensor region 1508 may include a first sensing system 1510 and a second sensing system 1512. The first sensing system 1510 may be an ambient light sensing system, and the second sensing system 1512 may be a camera. One or both of the sensing systems may be replaced with an output system, such as a flash, illuminator module, or the like. Other example systems that may be included in the front-facing sensor region 1508 include biometric sensing systems (e.g., face recognition systems, fingerprint recognition systems), proximity sensing systems, three-dimensional gesture recognition systems, and the like.

The front-facing sensor region 1508 may be surrounded by an active area of the display 1506. For example, the front-facing sensor region 1508 may be positioned in and/or aligned with a hole formed through the active area of the display 1506, such that the front-facing sensor region 1508 is surrounded by active (e.g., graphic-producing) display regions. In examples where the display is touch-sensitive or otherwise includes touch-sensing functionality, the front-facing sensor region 1508 may also be surrounded by touch-sensitive regions of the display. Examples of graphics that may be displayed near or around a front-facing sensor region are described with respect to the display portion 102 in FIG. 13A, and such discussion applies to the display portion 1500 as well.

In such cases, the display 1506 may be configured with at least an optically transmissive region with which the front-facing sensor region 1508 may be aligned (and through which the front-facing sensor region 1508 may receive and/or emit light). The optically transmissive region may correspond to or be defined by one or more holes formed through display components. For example, a hole may be defined through a display substrate, electrode layers, polarizers, light diffusers, support layers, masking layers, and the like. In some cases, the optically transmissive region may correspond to or be defined by the omission or lack of material in a certain area. For example, materials or components such as electrodes, conductive traces, LCD pixels, OLED pixels, or the like, may be omitted from an area to result in an optically transmissive region (e.g., an electrode layer may omit electrodes in the area of the front-facing sensor region 1508 to define an optically transmissive region).

As shown in FIG. 16A, the border 1602 defines the region where the active display area 1600 ends (e.g., where pixels or other graphic-producing elements are not present or are not visible). A masking structure 1604 (such as an ink) may be positioned on the front cover 1504 (e.g., on an interior surface of the front cover 1504) and may visually define the front-facing sensor region 1508 and may occlude the visibility of underlying components (e.g., a hole formed through the display 1506). The masking structure 1604 may define a hole to provide optical access for the front-facing sensor region 1508. In some cases, one or more coatings are provided on the front cover 1504 in the hole defined by the masking structure 1604, as described herein (e.g., an infrared-transmissive, visually-opaque coating).

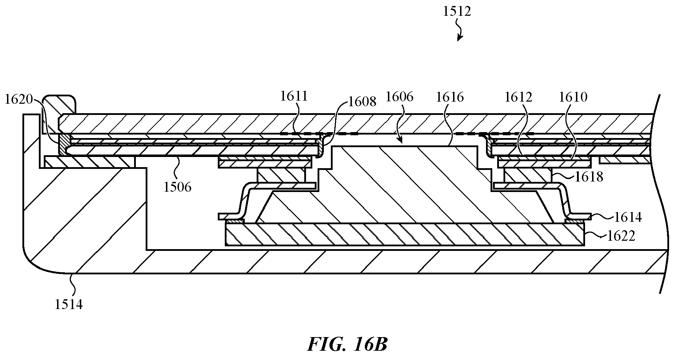

FIG. 16B is a partial cross-sectional view of the display portion 1500, viewed along line 16B-16B in FIG. 16A. As shown in FIG. 16B, a hole 1606 is defined through the display 1506 to provide optical access for the second sensor system 1512. In this example, the second sensor system 1512 is a front-facing camera. The second sensor system 1512 may include a camera module 1616, which may include a lens, an image sensor, and associated circuitry and/or other components to capture images (e.g., video and/or still images). The camera module 1616 may be coupled to a carrier 1632, which may be a housing component, a circuit board, or the like. The second sensor system 1512 may be coupled to a processing system (e.g., a processor) that is configured to analyze captured images and recognize gestures (e.g., hand waves, human movements, etc.). Such gestures may be used to control device operations, such as to launch, close, or change applications, scroll or move displayed graphics, control a cursor, or any other suitable device function.

At least a portion of the camera module 1616 may extend into the hole 1606 formed through the display 1506. By positioning the camera module 1616 at least partially in the hole 1606, a display portion may be made thinner than might otherwise be possible. In some cases, the camera module 1616 contacts the front cover 1504, while in other examples (as shown in FIG. 16B), the camera module 1616 is set apart from the front cover 1504. Where the camera module 1616 contacts the front cover, the camera module 1616 may be configured so that the interaction with the front cover positions components of the camera module 1616 (e.g., lenses, image sensors, etc.) at a target position relative to the front cover 1504.

In order to secure the camera module 1616 in position relative to the hole 1606, the camera module 1616 may be coupled to the display. For example, the camera module 1616 may be attached to a bracket 1614. The bracket 1614 may be formed from metal, polymer, or another suitable material, and the camera module 1616 may be attached to the bracket 1614 using adhesive, fasteners, interlocking structures, or the like.

An attachment plate 1610 may be coupled to the display 1506 along an interior surface of the display to define a structural mount for the bracket 1614. The attachment plate 1610 may be coupled to the display via adhesive 1612, such as a PSA, adhesive film, or the like. The attachment plate 1610 may be formed from or include metal, polymer, a composite, or other suitable material. The attachment plate 1610 may define a rigid mounting surface to which the bracket 1614 (and thus the camera module 1616) may be coupled while preventing or inhibiting damage to the display 1506 itself.

The bracket 1614 may be coupled to the attachment plate 1610, such as via adhesive 1618. As described herein, the attachment plate 1610 and/or the bracket 1614 may include alignment features that define the position of the bracket 1614 (and thus the camera module 1616) relative to the hole 1606. The adhesive 1618 may be configured to position the camera module 1616 at a predetermined position relative to the front cover 1504. For example, the adhesive 1618 may have a predetermined thickness that is configured to position the camera module 1616 at the predetermined position. As another example, the adhesive 1618 may be a flowable adhesive, and the camera module 1616 may be held at the predetermined position, relative to the front cover 1504, while the adhesive at least partially cures, thereby fixing the position of the camera module 1616.

A coating material 1608 may be applied to the exposed sides of the display 1506 in the through hole 1606. The coating material 1608 may be opaque or optically occlusive to prevent or inhibit light from the display from leaking from the side of the display and into the hole 1606, where it could interfere with the operation of the camera module 1616. The coating material 1608 may be an ink, adhesive, or other suitable material that blocks or inhibits light. The coating material 1608 may also form a barrier against contaminants (e.g., dirt, dust, liquids, etc.) from entering the display stack through the exposed sides. The coating material 1608 may be positioned below the masking structure 1611, such that the coating material 1608 is not visible through the front cover 1504. A coating material 1620 may also be positioned on the peripheral sides of the display. The coating material 1620 may provide a barrier against contaminants from entering the display stack through the exposed peripheral sides. More particularly, the peripheral sides of the display may be more likely to encounter contaminants due to its proximity to the seam between the front cover 1504 and the housing component 1514. Accordingly, the barrier function of the coating material 1620 may help prevent damage to the display 1506. The coating material 1620 may be the same or a different material as the coating material 1608. In some cases, the coating material 1620 may be a different material, and may not be opaque, as light leakage from the peripheral sides of the display may not be detrimental to the operation of the device.

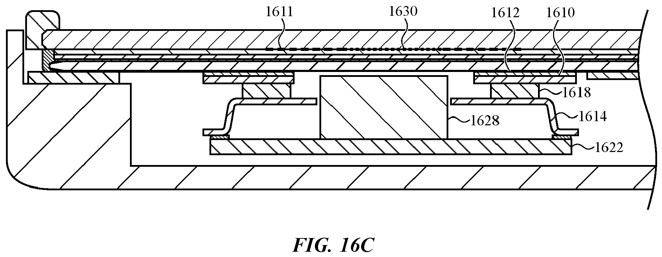

FIG. 16C is a partial cross-sectional view of the display portion 1500, viewed along line 16C-16C in FIG. 16A. FIG. 16C illustrates an example configuration of the first sensing system 1510. In the example shown, the first sensing system 1510 may be an ambient light sensing system that is configured to determine one or more parameters of ambient light around a device (e.g., a light intensity, color, brightness, etc.). The device may perform operations based on the determined parameters, such a changing a brightness of a display output, changing a color balance of a display output, initiating a sleep or wake mode of the device, or the like.

In the example configuration shown in FIG. 16C, there is no physical hole formed through the display 1506 (though in other examples a physical hole similar to the hole 1606 is provided, or the hole 1606 may extend over both the first and second sensing systems). Rather, the first sensing system 1510 may receive and/or emit light through one or more display components. As described above, the certain materials and/or components may be omitted from the display in the region above the first sensing system 1510 (e.g., electrodes, conductive traces, LCD pixels, OLED pixels, etc.) to improve optical transmission through the display 1506.

In some cases, a coating 1630 may be positioned over the first sensing system 1510 in the front-facing sensor region 1508. The coating 1630 may be a visually opaque coating that is transmissive in one or more other wavelengths (e.g., infrared). The particular wavelengths in which the coating 1630 is transmissive may be selected based on the optical sensing function of the first sensing system 1510. For example, the first sensing system 1510 may be configured to sense infrared radiation, and as such the coating 1630 may be visually opaque but transmissive to infrared light. In some cases, the coating 1630 and the masking structure 1611 have a similar visual appearance along the front of the front cover assembly, such that the boundary between the coating 1630 and the masking structure 1611 is not readily visually distinguishable.

As noted, the first sensing system 1510 may an ambient light sensor. The ambient light sensor may include a sensor module 1628, which may include a lens or window, a light sensor, and associated circuitry and/or other components to detect and/or determine properties of ambient light. The sensor module 1628 may be coupled to a carrier 1632, which may be a housing component, a circuit board, or the like. The carrier 1632 and the carrier 1622 may be separate components, or different portions of a single component. The first sensor system 1510 may be coupled to a processing system (e.g., a processor) that is configured to analyze signals received by the sensor module 1628 (e.g., a light sensitive element), and control device operations in response to the signals (e.g., to change screen brightness, color, etc., as described above).

In order to secure the sensor module 1628 in position relative to the front-facing sensor region 1508, the sensor module 1628 may be coupled to the display 1506. For example, the sensor module 1628 may be attached to the bracket 1614, which is in turn coupled to the attachment plate 1610, as described above with respect to FIG. 16B. Moreover, the positioning of the sensor module 1628 relative to the front cover may be performed in the manner described above with respect to the camera module 1616. While FIGS. 16B-16C illustrate both the camera module 1616 and the sensor module 1628 coupled to the same bracket 1614, in other examples, each module may be associated with a separate bracket. Also, separate attachment plates may be provided for the separate modules.

As described with respect to FIGS. 16B-16C, sensing systems may be coupled to the interior side of a display, such as via adhesives, fasteners, etc. In such cases, the back of the sensing systems (e.g., the side facing away from the front cover 1504) may be set apart from an interior surface of the housing component 1514 (or other component of the display portion 1500). In other examples, sensing systems may be coupled to or otherwise in contact with the housing component 1514, instead of or in addition to the display.

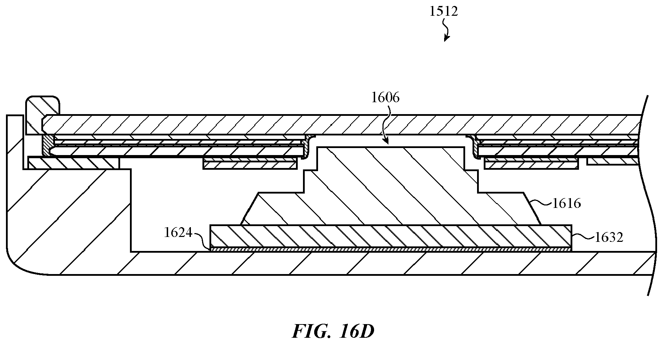

FIG. 16D is a partial cross-sectional view of the display portion 1500, viewed along line 16B-16B in FIG. 16A, showing an alternative mounting arrangement for the second sensing system 1512. This alternative arrangement may also be implemented for the first sensing system 1510 or any other sensing system.

As shown in FIG. 16D, the carrier 1622 is coupled to an interior surface of the housing component 1514, and is not securely attached to the display 1506 or otherwise to the front cover assembly. For example, the carrier 1622 may be coupled to the housing component 1514 with an adhesive 1624, such as a PSA, HSA, flowable adhesive, or any other suitable adhesive. The position of the carrier 1622 and camera module 1616 relative to the housing component 1514 and the front cover 1504 may be defined in a manner similar to that described with respect to the camera module 1616 in FIG. 16B. For example, the adhesive 1624 may be configured to position the camera module 1616 at a predetermined position relative to the housing component 1514 and the front cover 1504. For example, the adhesive 1624 may have a predetermined thickness that is configured to position the camera module 1616 at the predetermined position. As another example, the adhesive 1624 may be a flowable adhesive, and the camera module 1616 may be held at the predetermined position, relative to the housing component 1514, while the adhesive at least partially cures, thereby fixing the position of the camera module 1616.

In some cases, both the adhesive 1624 and the adhesive 1618 may be used to secure the camera module 1616 (and any other sensing systems) in a target position. In such cases, the adhesives may be the same adhesive or type of adhesive (e.g., they may both be PSA films), while in other cases the adhesives may be different (e.g., one may be a flowable adhesive and the other a PSA film). Other combinations are also contemplated.

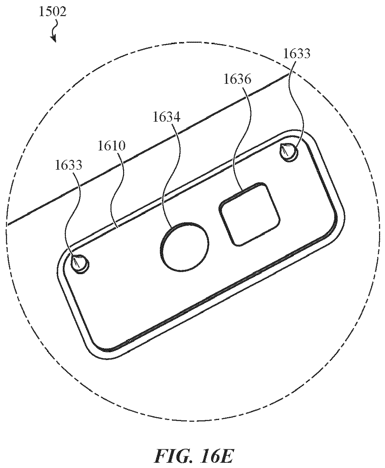

FIG. 16E shows a partial view of an interior side of the front cover assembly 1502, illustrating an example attachment plate 1610. The attachment plate 1610 may define separate holes 1634, 1636 for the sensing systems. In other examples, the attachment plate 1610 defines a single hole that is shared by multiple sensing systems. In other examples, the attachment plate 1610 defines different numbers and arrangements of holes for different components of a front-facing sensor region.

The attachment plate 1610 may also define alignment features 1633. The alignment features 1633 engage with corresponding and/or complementary alignment features on the bracket 1614 and/or the sensor modules themselves. For example, the alignment features 1633 may be pins, posts, or other protrusions, and the complementary alignment features may be slots, holes, or other recesses that accept the alignment features 1633. The engagement between the alignment features of the attachment plate 1610 and the bracket(s) and/or module(s) may align the modules relative to the attachment plate 1610 and position the modules in the proper location relative to the display 1506 (and the features of the display that facilitate the operation of the sensing systems, such as through-holes, coatings, maskings, and the like.

Described herein are various example devices in which a front-facing sensor region and/or camera is positioned in an active area of a display (e.g., surrounded all sides by graphic-producing display areas). Components that are positioned in the front-facing sensor region (e.g., cameras, light emitters, light receivers, etc.) may rely on optical access through the overlying front cover. In some cases, front covers include textures, coatings, surface treatments, films, or the like, which may interfere with the transmission of light through the front cover. In one example, a front-facing exterior surface of a front cover includes a surface texture, which may help reduce glare, reflections, or otherwise improve the functionality of the display. If such a texture were positioned over the front-facing sensor region, the texture may negatively impact the operation of the front-facing optical systems. Accordingly, where a front cover includes a texture and a front-facing sensor region, the texture may be omitted in the front-facing sensor region, resulting in a front cover that has a surface texture over a graphically active display region, and no texture (e.g., a polished or smooth surface) over a front-facing sensor region.

In order to produce a front cover with differently textured areas (e.g., a non-textured area in a front-facing sensor region and a textured region in a graphically active display area), a mask may be applied to a first region of an exterior surface of the front cover (e.g., a front-facing sensor region) prior to a texturing operation (e.g., an etching operation, abrasive blasting operation, etc.) to prevent the first region from becoming textured. The mask may thereafter be removed to reveal a non-textured surface (e.g., an area of the surface that has a different texture, such as a polished or substantially smooth texture that does not substantially affect transmitted light).

The non-textured surface of a front cover may have an Ra value ranging from 1 to 150 nm, 1 to 100 nm, 1 to 50 nm, 1 to 25 nm, or 1 to 20 nm. The textured surface of the front cover may have an Ra value ranging from 0 to 2.5 microns, 0 to 2 microns, 0 to 1.5 microns. Other values of the textured and non-textured surfaces may also be used.

As described herein, optical sensing systems in a display portion of an electronic device may be surrounded by graphically active areas of a display (and/or aligned with holes formed through graphically active areas of a display). For example, FIGS. 1A, 13A-13B, 15A, and 16A-16D illustrate examples in which an area of the front cover that provides access to optical sensing systems is surrounded by active areas of the display. In such cases, light from the display being propagated through the front cover (e.g., due to internal reflection) may interfere with the operation of the sensing systems. Accordingly, such devices may be configured to locally dim or deactivate portions of the display near the optical sensors when the sensors are in use. For example, when an image is being captured with a front-facing camera, an area of the display surrounding the camera window (but less than the full display) may be graphically inactive (e.g., the pixels in that area may be blank, black, unilluminated, or the like). In one particular example, a black or unilluminated area (e.g., a circle or pill-shaped region) that has a black or dark visual appearance may be displayed around the camera.

Local dimming or deactivating of graphical outputs may be performed during the duration of a sensing operation, and may or may not be visible or noticeable to an observer. For example, an ambient light measurement may be captured in less than a second, and the local dimming/deactivating may occur for less than a second (which may not be perceptible to a user). The duration of a local dimming/deactivating of graphics may be substantially equal to the duration of a sensing operation (e.g., less than about 105% of the duration of the sensing operation, less than about 110% of the duration of the sensing operation, less than about 120% of the duration of the sensing operation).

As described herein, displays may include a front-facing sensor region in which sensors (e.g., optical sensors) may be positioned. It will be understood that the components and/or systems in a front-facing sensor region or front-facing camera region need not be limited to optical sensors, and may include other components and/or systems instead of or in addition to sensors. Example components and/or systems include, without limitation, speakers, microphones, flashes, illuminator modules, biometric sensing systems (e.g., face recognition systems, fingerprint recognition systems), proximity sensing systems, three-dimensional gesture recognition systems, pressure sensors, barometric vents, and the like.

FIG. 17 depicts an example schematic diagram of an electronic device 1700. The electronic device 1700 may be an embodiment of or otherwise represent the device 100 (or other devices described herein). The device 1700 includes one or more processing units 1701 that are configured to access a memory 1702 having instructions stored thereon. The instructions or computer programs may be configured to perform one or more of the operations or functions described with respect to the electronic devices described herein. For example, the instructions may be configured to control or coordinate the operation of one or more displays 1708, one or more touch sensors 1703, one or more force sensors 1705, one or more communication channels 1704, one or more audio input systems 1709, one or more audio output systems 1710, one or more positioning systems 1711, one or more sensors 1712, and/or one or more haptic feedback devices 1706. Where the device 1700 is a notebook computer, the components and/or systems described with respect to FIG. 17 may be included in the base portion of the device (e.g., the base portion 104), the display portion of the device (e.g., the display portion 102 or any other display portion described herein), or distributed between the base portion and the display portion. Components and/or systems described with respect to FIG. 17 may be part of the device components 212 (FIG. 2).

The processing units 1701 of FIG. 17 may be implemented as any electronic device capable of processing, receiving, or transmitting data or instructions. For example, the processing units 1701 may include one or more of: a microprocessor, a central processing unit (CPU), an application-specific integrated circuit (ASIC), a digital signal processor (DSP), or combinations of such devices. As described herein, the term "processor" is meant to encompass a single processor or processing unit, multiple processors, multiple processing units, or other suitably configured computing element or elements.

The memory 1702 can store electronic data that can be used by the device 1700. For example, a memory can store electrical data or content such as, for example, audio and video files, images, documents and applications, device settings and user preferences, programs, instructions, timing and control signals or data for the various modules, data structures or databases, and so on. The memory 1702 can be configured as any type of memory. By way of example only, the memory can be implemented as random access memory, read-only memory, Flash memory, removable memory, or other types of storage elements, or combinations of such devices.

The touch sensors 1703 may detect various types of touch-based inputs and generate signals or data that are able to be accessed using processor instructions. The touch sensors 1703 may use any suitable components and may rely on any suitable phenomena to detect physical inputs. For example, the touch sensors 1703 may be capacitive touch sensors, resistive touch sensors, acoustic wave sensors, or the like. The touch sensors 1703 may include any suitable components for detecting touch-based inputs and generating signals or data that are able to be accessed using processor instructions, including electrodes (e.g., electrode layers), physical components (e.g., substrates, spacing layers, structural supports, compressible elements, etc.), processors, circuitry, firmware, and the like. The touch sensors 1703 may be integrated with or otherwise configured to detect touch inputs applied to any portion of the device 1700. For example, the touch sensors 1703 may be configured to detect touch inputs applied to any portion of the device 1700 that includes a display (and may be integrated with a display), such as the display 103 (or any other display described herein). The touch sensors 1703 may operate in conjunction with the force sensors 1705 to generate signals or data in response to touch inputs. A touch sensor or force sensor that is positioned over a display surface or otherwise integrated with a display may be referred to herein as a touch-sensitive display, force-sensitive display, or touchscreen.

The force sensors 1705 may detect various types of force-based inputs and generate signals or data that are able to be accessed using processor instructions. The force sensors 1705 may use any suitable components and may rely on any suitable phenomena to detect physical inputs. For example, the force sensors 1705 may be strain-based sensors, piezoelectric-based sensors, piezoresistive-based sensors, capacitive sensors, resistive sensors, or the like. The force sensors 1705 may include any suitable components for detecting force-based inputs and generating signals or data that are able to be accessed using processor instructions, including electrodes (e.g., electrode layers), physical components (e.g., substrates, spacing layers, structural supports, compressible elements, etc.), processors, circuitry, firmware, and the like. The force sensors 1705 may be used in conjunction with various input mechanisms to detect various types of inputs. For example, the force sensors 1705 may be used to detect presses or other force inputs that satisfy a force threshold (which may represent a more forceful input than is typical for a standard "touch" input). Like the touch sensors 1703, the force sensors 1705 may be integrated with or otherwise configured to detect force inputs applied to any portion of the device 1700. For example, the force sensors 1705 may be configured to detect force inputs applied to any portion of the device 1700 that includes a display (and may be integrated with a display), such as the display 103 (or any other display described herein). The force sensors 1705 may operate in conjunction with the touch sensors 1703 to generate signals or data in response to touch- and/or force-based inputs.

The device 1700 may also include one or more haptic devices 1706. The haptic device 1706 may include one or more of a variety of haptic technologies such as, but not necessarily limited to, rotational haptic devices, linear actuators, piezoelectric devices, vibration elements, and so on. In general, the haptic device 1706 may be configured to provide punctuated and distinct feedback to a user of the device. More particularly, the haptic device 1706 may be adapted to produce a knock or tap sensation and/or a vibration sensation. Such haptic outputs may be provided in response to detection of touch and/or force inputs, and may be imparted to a user through the exterior surface of the device 1700 (e.g., via a glass or other surface that acts as a touch- and/or force-sensitive display or surface). The haptic device 1706 may provide haptic outputs in response to key inputs applied to a virtual (e.g., touch-screen based) keyboard. A touch-screen based keyboard may be provided on an upper surface of a base portion of a device (e.g., the base portion 104).

The one or more communication channels 1704 may include one or more wireless interface(s) that are adapted to provide communication between the processing unit(s) 1701 and an external device. The one or more communication channels 1704 may include antennas (e.g., antennas that include or use the housing components as radiating members), communications circuitry, firmware, software, or any other components or systems that facilitate wireless communications with other devices. In general, the one or more communication channels 1704 may be configured to transmit and receive data and/or signals that may be interpreted by instructions executed on the processing units 1701. In some cases, the external device is part of an external communication network that is configured to exchange data with wireless devices. Generally, the wireless interface may communicate via, without limitation, radio frequency, optical, acoustic, and/or magnetic signals and may be configured to operate over a wireless interface or protocol. Example wireless interfaces include radio frequency cellular interfaces (e.g., 2G, 3G, 4G, 4G long-term evolution (LTE), 5G, GSM, CDMA, or the like), fiber optic interfaces, acoustic interfaces, Bluetooth interfaces, infrared interfaces, USB interfaces, Wi-Fi interfaces, TCP/IP interfaces, network communications interfaces, or any conventional communication interfaces. The one or more communications channels 1704 may also include ultra-wideband (UWB) interfaces, which may include any appropriate communications circuitry, instructions, and number and position of suitable UWB antennas.

As shown in FIG. 17, the device 1700 may include a battery 1707 that is used to store and provide power to the other components of the device 1700. The battery 1707 may be a rechargeable power supply that is configured to provide power to the device 1700. The battery 1707 may be coupled to charging systems (e.g., wired and/or wireless charging systems) and/or other circuitry to control the electrical power provided to the battery 1707 and to control the electrical power provided from the battery 1707 to the device 1700.

The device 1700 may also include one or more displays 1708 configured to display graphical outputs. The displays 1708 may use any suitable display technology, including liquid crystal displays (LCD), organic light emitting diodes (OLED), active-matrix organic light-emitting diode displays (AMOLED), or the like. The displays 1708 may display graphical user interfaces, images, icons, or any other suitable graphical outputs. The display 1708 may correspond to the display 103 or other displays described herein.

The device 1700 may also provide audio input functionality via one or more audio input systems 1709. The audio input systems 1709 may include microphones, transducers, or other devices that capture sound for voice calls, video calls, audio recordings, video recordings, voice commands, and the like.

The device 1700 may also provide audio output functionality via one or more audio output systems (e.g., speakers) 1710. The audio output systems 1710 may produce sound from voice calls, video calls, streaming or local audio content, streaming or local video content, or the like.

The device 1700 may also include a positioning system 1711. The positioning system 1711 may be configured to determine the location of the device 1700. For example, the positioning system 1711 may include magnetometers, gyroscopes, accelerometers, optical sensors, cameras, global positioning system (GPS) receivers, inertial positioning systems, or the like. The positioning system 1711 may be used to determine spatial parameters of the device 1700, such as the location of the device 1700 (e.g., geographical coordinates of the device), measurements or estimates of physical movement of the device 1700, an orientation of the device 1700, or the like.

The device 1700 may also include one or more sensors 1712 to receive inputs (e.g., from a user or another computer, device, system, network, etc.) or to detect any suitable property or parameter of the device, the environment surrounding the device, people, or things interacting with the device (or nearby the device), or the like. For example, a device may include temperature sensors, biometric sensors (e.g., fingerprint sensors, photoplethysmographs, blood-oxygen sensors, blood sugar sensors, facial recognition systems, or the like), eye-tracking sensors, retinal scanners, humidity sensors, buttons, switches, lid-closure sensors, or the like. Sensors 1712 may also include optical sensors, including cameras, ambient light sensors, proximity sensors, and the like.

The device 1700 may also include one or more input devices 1713. An input device 1713 is a device that is configured to receive user input. The input devices 1713 may include, for example, a keyboard (touch-screen based or mechanical), a trackpad or other pointing device, a push button, a touch-activated button, a key pad, or the like. In some embodiments, the input device 1713 may provide a dedicated or primary function, including, for example, a power button, volume buttons, home buttons, scroll wheels, and camera buttons. Generally, a touch sensor (e.g., a touchscreen) or a force sensor may also be classified as an input device. However, for purposes of this illustrative example, touch sensors and force sensors are depicted as distinct components within the device 1700.

To the extent that multiple functionalities, operations, and structures described with reference to FIG. 17 are disclosed as being part of, incorporated into, or performed by the device 1700, it should be understood that various embodiments may omit any or all such described functionalities, operations, and structures. Thus, different embodiments of the device 1700 may have some, none, or all of the various capabilities, apparatuses, physical features, modes, and operating parameters discussed herein. Further, the systems included in the device 1700 are not exclusive, and the device 1700 may include alternative or additional systems, components, modules, programs, instructions, or the like, that may be necessary or useful to perform the functions described herein.

As described above, one aspect of the present technology is the gathering and use of data available from various sources to improve the usefulness and functionality of devices such as mobile phones. The present disclosure contemplates that in some instances, this gathered data may include personal information data that uniquely identifies or can be used to contact or locate a specific person. Such personal information data can include demographic data, location-based data, telephone numbers, email addresses, twitter IDs, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to locate devices, deliver targeted content that is of greater interest to the user, or the like. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of advertisement delivery services, the present technology can be configured to allow users to select to "opt in" or "opt out" of participation in the collection of personal information data during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences based on non-personal information data or a bare minimum amount of personal information, such as the content being requested by the device associated with a user, other non-personal information available to the content delivery services, or publicly available information.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of the specific embodiments described herein are presented for purposes of illustration and description. They are not targeted to be exhaustive or to limit the embodiments to the precise forms disclosed. It will be apparent to one of ordinary skill in the art that many modifications and variations are possible in view of the above teachings. Also, when used herein to refer to positions of components, the terms above, below, over, under, left, or right (or other similar relative position terms), do not necessarily refer to an absolute position relative to an external reference, but instead refer to the relative position of components within the figure being referred to. Similarly, horizontal and vertical orientations may be understood as relative to the orientation of the components within the figure being referred to, unless an absolute horizontal or vertical orientation is indicated.

Features, structures, configurations, components, techniques, etc. shown or described with respect to any given figure (or otherwise described in the application) may be used with features, structures, configurations, components, techniques, etc. described with respect to other figures. For example, any given figure of the instant application should not be understood to be limited to only those features, structures, configurations, components, techniques, etc. shown in that particular figure. Similarly, features, structures, configurations, components, techniques, etc. shown only in different figures may be used or implemented together. Further, features, structures, configurations, components, techniques, etc. that are shown or described together may be implemented separately and/or combined with other features, structures, configurations, components, techniques, etc. from other figures or portions of the instant specification. Further, for ease of illustration and explanation, figures of the instant application may depict certain components and/or sub-assemblies in isolation from other components and/or sub-assemblies of an electronic device, though it will be understood that components and sub-assemblies that are illustrated in isolation may in some cases be considered different portions of a single electronic device (e.g., a single embodiment that includes multiple of the illustrated components and/or sub-assemblies).

### Additional Numbered Statements

1. A laptop computer comprising:
   a base portion comprising a keyboard; and
   a display portion flexibly coupled to the base portion and comprising:
      a housing component formed of metal and defining a set of side surfaces;
      a front cover assembly coupled to the housing component and comprising:
         a first glass member defining at least a portion of a front exterior surface of the display portion; and
         a display coupled to the first glass member; and
      a rear cover assembly coupled to the housing component and comprising a second glass member defining at least a portion of a rear exterior surface of the display portion.
2. The laptop computer of statement 1, wherein:
   the first glass member defines a first portion of the front exterior surface of the display portion; and
   the housing component defines a second portion of the front exterior surface of the display portion.
3. The laptop computer of statement 2, wherein:
   the second glass member defines a first portion of the rear exterior surface of the display portion; and
   the housing component defines a second portion of the rear exterior surface of the display portion.
4. The laptop computer of statement 1, wherein the rear cover assembly further comprises an opaque mask structure coupled to an interior surface of the second glass member.
5. The laptop computer of statement 1, wherein the set of side surfaces defined by the housing component comprises:
   a first side surface;
   a second side surface;
   a third side surface;
   a first corner surface extending from the first side surface to the second side surface; and
   a second corner surface extending from the second side surface to the third side surface.
6. The laptop computer of statement 1, further comprising a touch-sensing layer positioned between the display and the first glass member.
7. A laptop computer comprising:
   a base portion comprising a keyboard; and
   a display portion flexibly coupled to the base portion and comprising:
      a housing component defining a first opening along a front side of the housing component and a second opening along a rear side of the housing component;
      a front cover assembly positioned in the first opening and coupled to the housing component, the front cover assembly comprising:
         a first glass member defining a display region; and
         a display coupled to the first glass member; and
      a rear cover assembly positioned in the second opening and coupled to the housing component, the rear cover assembly comprising a second glass member defining at least a portion of a rear exterior surface of the display portion.
8. A laptop computer comprising:
   a base portion comprising a keyboard; and
   a display portion flexibly coupled to the base portion and comprising:
      a front cover assembly comprising
         a front cover comprising a first glass material and defining at least a portion of a front surface of the display portion; and
         a display positioned below the front cover;
      a rear cover comprising a second glass material and defining at least a portion of a rear surface of the display portion;
      a housing component coupled to the front cover and rear cover and comprising a mid-chassis positioned between the front cover and the rear cover;
      a first flexible circuit element conductively coupled to a display component of the display and extending from the display along a first side edge of the display, at least a portion of the first flexible circuit element positioned between the mid-chassis and the front cover assembly; and
      a second flexible circuit element conductively coupled to a touch-sensing component of the display and extending from the display along a second side edge of the display different from the first side edge, at least a portion of the second flexible circuit element positioned between the mid-chassis and the front cover assembly.
9. The laptop computer of statement 8, wherein the second side edge of the display is perpendicular to the first side edge.
10. The laptop computer of statement 8, further comprising a third flexible circuit element conductively coupled to the touch-sensing component of the display and extending from the display along a third side edge of the display different from the first side edge and from the second side edge.
11. The laptop computer of statement 10, wherein:
   the first side edge of the display is a top side edge of the display; and
   the second and third side edges of the display are lateral side edges of the display.
12. The laptop computer of statement 11, wherein;
   a fourth side edge of the display lacks flexible circuit elements extending therefrom; and
   the fourth side edge of the display is a bottom side edge of the display.
13. The laptop computer of statement 10, wherein:
   the front cover assembly further comprises a circuit board;
   the first flexible circuit element is conductively coupled to a first segment of the circuit board; and
   the second and third flexible circuit elements are conductively coupled to a second segment of the circuit board, the second segment of the circuit board conductively isolated from the first segment of the circuit board.
14. A laptop computer comprising:
   a base portion comprising a keyboard; and
   a display portion flexibly coupled to the base portion and comprising:
      a housing component;
      a cover structure coupled to the housing component and comprising:
         a transparent cover member having a first thickness and defining a first hole; and
         a transparent camera cover having a second thickness less than the first thickness and positioned in the first hole such that a recess is defined along a rear surface of the cover structure;
      a display coupled to the transparent cover member and defining a second hole extending through an active display region of the display;
         and
      a camera having a lens assembly extending through the second hole and into the recess.
15. The laptop computer of statement 14, wherein:
   the transparent cover member comprises glass; and
   the transparent camera cover comprises sapphire.
16. The laptop computer of statement 14, wherein the second thickness is less than or equal to half of the first thickness.
17. The laptop computer of statement 14, wherein:
   the laptop computer further comprises a mounting structure adhered to an interior surface of the transparent cover member, the mounting structure defining a ledge positioned in the first hole; and
   the transparent camera cover is adhered to the ledge of the mounting structure.
18. The laptop computer of statement 14, wherein the display is configured to produce a graphical output in the active display region that surrounds the transparent camera cover.
19. The laptop computer of statement 14, further comprising:
   a first opaque mask positioned along an interior surface of the transparent cover member and defining a first mask region around the first hole; and
   a second opaque mask positioned along an interior surface of the transparent camera cover and defining a second mask region around a transparent window portion of the transparent camera cover.
20. A laptop computer comprising:
   a base portion comprising a keyboard; and
   a display portion flexibly coupled to the base portion and comprising:
      a housing component comprising:
         a first wall portion defining a first side exterior surface of the display portion;
         a second wall portion defining a second side exterior surface of the display portion opposite to the first side exterior surface; and
         a mid-chassis extending between the first wall portion and the second wall portion and defining an array of attachment holes;
      a front cover assembly positioned along a first side of the mid-chassis and comprising:
         a transparent cover member defining at least part of a front surface of the display portion;
         a display positioned below the transparent cover member; and
         a mounting structure positioned below the display and comprising an array of attachment features;
      a set of fasteners, each fastener of the set of fasteners extending through a respective attachment hole of the array of attachment holes and engaging with a respective attachment feature of the array of attachment features; and
      a rear cover assembly positioned along a second side of the mid-chassis and defining at least part of a rear surface of the display portion.
21. The laptop computer of statement 20, wherein the housing component is a unitary metal structure defining the mid-chassis, the first wall portion, and the second wall portion.
22. The laptop computer of statement 20, wherein:
   the housing component comprises a wall structure formed of metal and defining the first wall portion and the second wall portion; and
   the mid-chassis is coupled to the wall structure.
23. The laptop computer of statement 22, wherein the mid-chassis comprises a fiber-reinforced polymer sheet.
24. The laptop computer of statement 20, wherein:
   the fasteners of the set of fasteners are threaded fasteners; and
   the attachment features of the array of attachment features are threaded bosses.
25. The laptop computer of statement 20, wherein:
   the mounting structure comprises a metal plate; and
   the attachment features of the array of attachment features are welded to the mounting structure.
26. A laptop computer comprising:
   a base portion comprising a keyboard; and
   a display portion flexibly coupled to the base portion and comprising:
      a housing component defining:
         a first wall portion defining a first exterior surface of the display portion;
         a second wall portion defining a second exterior surface of the display portion opposite to the first exterior surface; and
         a composite mid-chassis structure coupled to the first wall portion and the second wall portion and extending between the first wall portion and the second wall portion;
      a front cover assembly coupled to a front side of the housing component and comprising:
         a first glass member defining at least a portion of a front exterior surface of the display portion; and
         a display coupled to the first glass member; and
      a rear cover assembly coupled to a rear side of the housing component and comprising a second glass member defining at least a portion of a rear exterior surface of the display portion.

## Claims

1. A laptop computer comprising:
a base portion comprising a keyboard; and
a display portion flexibly coupled to the base portion and comprising:
a housing component formed of metal and defining a set of side surfaces;
a front cover assembly coupled to the housing component and comprising:
a first glass member defining at least a portion of a front exterior surface of the display portion; and
a display coupled to the first glass member; and
a rear cover assembly coupled to the housing component and comprising a second glass member defining at least a portion of a rear exterior surface of the display portion.

2. The laptop computer of claim 1, wherein:
the first glass member defines a first portion of the front exterior surface of the display portion; and
the housing component defines a second portion of the front exterior surface of the display portion.

3. The laptop computer of claim 2, wherein:
the second glass member defines a first portion of the rear exterior surface of the display portion; and
the housing component defines a second portion of the rear exterior surface of the display portion.

4. The laptop computer of any preceding claim, wherein the rear cover assembly further comprises an opaque mask structure coupled to an interior surface of the second glass member.

5. The laptop computer of any preceding claim, wherein the set of side surfaces defined by the housing component comprises:
a first side surface;
a second side surface;
a third side surface;
a first corner surface extending from the first side surface to the second side surface; and
a second corner surface extending from the second side surface to the third side surface.

6. The laptop computer of any preceding claim, further comprising a touch-sensing layer positioned between the display and the first glass member.

7. A laptop computer comprising:
a base portion comprising a keyboard; and
a display portion flexibly coupled to the base portion and comprising:
a housing component defining a first opening along a front side of the housing component and a second opening along a rear side of the housing component;
a front cover assembly positioned in the first opening and coupled to the housing component, the front cover assembly comprising:
a first glass member defining a display region; and
a display coupled to the first glass member; and
a rear cover assembly positioned in the second opening and coupled to the housing component, the rear cover assembly comprising a second glass member defining at least a portion of a rear exterior surface of the display portion.

8. A laptop computer comprising:
a base portion comprising a keyboard; and
a display portion flexibly coupled to the base portion and comprising:
a front cover assembly comprising
a front cover comprising a first glass material and defining at least a portion of a front surface of the display portion; and
a display positioned below the front cover;
a rear cover comprising a second glass material and defining at least a portion of a rear surface of the display portion;
a housing component coupled to the front cover and rear cover and comprising a mid-chassis positioned between the front cover and the rear cover;
a first flexible circuit element conductively coupled to a display component of the display and extending from the display along a first side edge of the display, at least a portion of the first flexible circuit element positioned between the mid-chassis and the front cover assembly; and
a second flexible circuit element conductively coupled to a touch-sensing component of the display and extending from the display along a second side edge of the display different from the first side edge, at least a portion of the second flexible circuit element positioned between the mid-chassis and the front cover assembly.

9. The laptop computer of claim 8, wherein the second side edge of the display is perpendicular to the first side edge.

10. The laptop computer of claim 8 or claim 9, further comprising a third flexible circuit element conductively coupled to the touch-sensing component of the display and extending from the display along a third side edge of the display different from the first side edge and from the second side edge.

11. The laptop computer of claim 10, wherein:
the first side edge of the display is a top side edge of the display; and
the second and third side edges of the display are lateral side edges of the display.

12. The laptop computer of claim 11, wherein;
a fourth side edge of the display lacks flexible circuit elements extending therefrom; and
the fourth side edge of the display is a bottom side edge of the display.

13. The laptop computer of claim 10 or claim 11, wherein:
the front cover assembly further comprises a circuit board;
the first flexible circuit element is conductively coupled to a first segment of the circuit board; and
the second and third flexible circuit elements are conductively coupled to a second segment of the circuit board, the second segment of the circuit board conductively isolated from the first segment of the circuit board.
